# EUROPEAN PATENT APPLICATION

(11) **EP 4 826 504 A1**
(43) Date of publication of application: **21.10.2026**
(21) Application number: 26170640.2
(22) Date of filing: 02.04.2026
(51) Int. Cl.: G06F 3/04842, G06F 9/451, G06N 20/00, G06F 3/14, H04L 67/1095

(54) **TRAINING A SCREENSHOT REPLICATION SYSTEM**

(30) Priority: 16.04.2025 US 202519180692
(71) Applicant: GDM Holding LLC, Mountain View, CA 94043 (US)
(72) Inventor: TRAN, Duc-Hieu, 8002 Zürich (CH); HARTMANN, Florian Nils, 8002 Zürich (CH)
(74) Representative: Marks & Clerk GST

(57) **Abstract**

Example embodiments of the present disclosure provide an example method for managing computer systems and networks that perform reconstruction of source content depicted in screenshots. Screenshot replication data can be leveraged to reconstruct source content associated therewith, as well as associated states. The screenshot replication data, which can be associated with a first operational state in which a first device is operating, can be generated based on information depicted in the screenshots. A second computing device can be automatically controlled based on the screenshot replication data to cause the second computing device to operate in a second operational state. The second operational state can be a replica of the first operational state.

## Description

### FIELD

The present disclosure relates generally to machine learning processes and machine-learned devices and systems. More particularly, the present disclosure relates to improved generation of training data utilized for screenshot replications.

### BACKGROUND

Computers can utilize various types of information as representations of visual data output by displays of the computers. Computers can generate screenshots, which can include image files showing content of screens of the computers at the moments at which the screenshots are generated. The screenshots can be utilized to capture outputs by screens of the displays at given times. The computers can generate the screenshots using input received by user interfaces of the computers. The screenshots can be generated in response to receiving signals generated in various ways, such as by keystrokes, mouse clicks, and/or various other input devices. The screenshots can include various types of data output by various portions of the screens. The screenshots can include digital, and/or visual, recordings of computer screen output. Images associated with the computer screen output can be captured as the screenshots and managed with files, such as image files of various types. The screenshots can be stored by the computers and output in various ways at future times.

### SUMMARY

Aspects and advantages of embodiments of the present disclosure will be set forth in part in the following description, or can be learned from the description, or can be learned through practice of the embodiments.

Example aspects of the present disclosure provide an example method. In some implementations, the example method can include obtaining, by a computing system including one or more computing devices, an input that may include a screenshot, where the screenshot may include an image that depicts content displayed on a screen of a first computing device operating in a first operational state; and processing, by the computing system, the screenshot with a machine-learned information extraction model to generate, as an output of the machine-learned information extraction model, screenshot replication data, where the screenshot replication data may include one or both of: one or more values for one or more operational parameters associated with the first operational state; and/or one or more navigation identifiers associated with the first operational state. The method can also include automatically controlling, by the computing system, a second computing device based on the screenshot replication data to cause the second computing device to operate in a second operational state, the second operational state being a replica of the first operational state.

The computer-implemented method where the screenshot replication data may include the one or more values for the one or more operational parameters associated with the first operational state, and where the one or more values for the one or more operational parameters may include one or more of: a current application being executed by the first computing device and data describing one or more user interface elements contained within the content.

The screenshot replication data may include the one or more navigation identifiers associated with the first operational state, and where the one or more navigation identifiers may include one or more of: a uniform resource locator, an application menu hierarchy position, and a scroll position associated with the first operational state.

Automatically controlling, by the computing system, the second computing device based on the screenshot replication data may include: processing, by the computing system, the screenshot replication data with a machine-learned reconstruction model to generate, as an output of the machine-learned reconstruction model, a series of control actions to navigate the second computing device from a current operational state of the second computing device to the second operational state; and automatically controlling, by the computing system, the second computing device to perform the series of control actions.

The computer-implemented method may include: processing, by the computing system, the screenshot and data descriptive of the second operational state with a screen discrimination model to generate, as an output of the screen discrimination model, difference data indicating whether the second operational state successfully replicates the first operational state; and providing, by the computing system, the difference data as an output.

Processing the screenshot may include: mapping the one or more navigation identifiers to actions effecting the replica of the first operational state on the second computing device, where automatically controlling, by the computing system, the second computing device may include automatically controlling, by the computing system, the second computing device to perform the actions.

The computer-implemented method may include: mapping the screenshot replication data associated with the first operational state to real-time replication data associated with the second operational state to identify whether the screenshot replication data matches the real-time replication data.

The screenshot may include a representation of a website window or a mobile computing device application window of the first computing device.

The machine-learned information extraction model, a machine-learned reconstruction model, and a screen discrimination model can be trained separately from each other.

The machine-learned information extraction model can be been trained using a set of supervised training data that may include a plurality of training pairs. Each training pair may include a training screenshot and training information identifying the screenshot. The training information may include one or more training operational parameters and one or more training navigation identifiers. The machine-learned information extraction model can be trained to predict information identifying the screenshot.

The second computing device can be the first computing device, and automatically controlling, by the computing system, the second computing device may include: reconstructing a scroll position of a website or a mobile computing device application; and generating a reconstruction of the screenshot by scrolling the website or the mobile computing device application to the scroll position.

The computer-implemented method may include: training a machine-learned reconstruction model using a set of supervised training data including a plurality of training pairs, each training pair including a training screenshot, training screenshot replication data, and a training reconstruction of the screenshot, where the training screenshot replication data can include one or more training operational parameters and one or more training navigation parameters, the training reconstruction can include a reconstruction mapped to the training screenshot to render a training depiction of a dataset corresponding to the training reconstruction of the screenshot, and the machine-learned reconstruction model can be trained to predict a reconstruction of the screenshot.

Processing, by the computing system, the screenshot may include: identifying a portion of the screenshot representing user interface elements of a website or a mobile computing device application; and in response to identifying the portion of the screenshot, identifying the user interface elements of the website or the mobile computing device application.

Example aspects of the present disclosure provide an example computing system that includes one or more processors; and one or more example non-transitory computer-readable media that collectively store a machine-learned information extraction model configured to generate, as an output of the machine-learned information extraction model, screenshot replication data including operational data and navigation data associated with a first operational state. The one or more example non-transitory computer-readable media can collectively store a screenshot orchestrator configured to: obtain an input that may include a screenshot, where the screenshot may include an image that depicts content displayed on a screen of a first computing device operating in a first operational state; and automatically control a second computing device based on the screenshot replication data to cause the second computing device to operate in a second operational state, the second operational state being a replica of the first operational state.

The computing system where the operational data may include one or more values for one or more operational parameters associated with the first operational state, where the one or more values for the one or more operational parameters may include one or more of: a current application being executed by the first computing device and data describing one or more user interface elements contained within the content, where the navigation data may include the one or more navigation identifiers associated with the first operational state, and where the one or more navigation identifiers may include one or more of: a uniform resource locator, an application menu hierarchy position, or a scroll position associated with the first operational state.

The navigation data may include one or more navigation identifiers associated with the first operational state, and where the one or more navigation identifiers may include one or more of: a mobile device application identifier, an application menu hierarchy position, or a scroll position associated with the first operational state.

Automatically controlling, by the computing system, the second computing device based on the screenshot replication data may include: processing, by the computing system, the screenshot replication data with a machine-learned reconstruction model to generate, as an output of the machine-learned reconstruction model, a series of control actions may include a page location action, an application menu hierarchy position action, and a scroll position action.

The operational data may include user interface element data describing one or more user interface elements contained within the content, the one or more user interface elements may include one or more static user interface elements and one or more dynamic user interface elements, where the second computing device operating in the second operational state displays individual ones of the one or more static user interface elements with a same static content as in the screenshot, and individual ones of the one or more dynamic user interface elements with a same or different dynamic content than in the screenshot.

Example aspects of the present disclosure provide one or more example non-transitory computer-readable media collectively storing instructions that, when executed by a computing system, cause the computing system to perform example operations. In some implementations, the example operations can include obtaining a screenshot depicting content displayed on a device screen; processing the screenshot with a machine-learned information extraction model to generate, as an output of the machine-learned information extraction model, screenshot replication data, where the screenshot replication data may include one or both of operational data and navigation data; and automatically controlling a computing device based on the screenshot replication data to cause the computing device to initiate replication of an operational state used to present the content on the device screen.

The one or more non-transitory computer-readable media the operations may include: receiving a notification of a login error or a communication channel subscription error prior to completion of the replication of the operational state.

Example aspects of the present disclosure provide an example method. In some implementations, the example method can include obtaining, by a computing system including one or more computing devices, an input that may include a screenshot, where the screenshot may include an image that depicts content displayed on a screen of a first computing device operating in a first operational state; and processing, by the computing system, the screenshot with a machine-learned information extraction model to generate, as an output of the machine-learned information extraction model, screenshot replication data, where the screenshot replication data may include one or both of: one or more values for one or more operational parameters associated with the first operational state; and/or one or more navigation identifiers associated with the first operational state. The method can include automatically controlling, by the computing system, a second computing device based on the screenshot replication data to cause the second computing device to operate in a second operational state, the second operational state being a replica of the first operational state. The machine-learned information extraction model can be trained using a set of supervised training data comprising a plurality of training pairs, each training pair including a training screenshot and training information identifying the screenshot, the training information including one or more training operational parameters and one or more training navigation parameters. The machine-learned information extraction model can be trained to predict information identifying the screenshot.

Example aspects of the present disclosure provide an example method. In some implementations, the example method can include obtaining, by a computing system including one or more computing devices, an input that may include a screenshot, where the screenshot may include an image that depicts content displayed on a screen of a first computing device operating in a first operational state; and processing, by the computing system, the screenshot with a machine-learned information extraction model to generate, as an output of the machine-learned information extraction model, screenshot replication data, where the screenshot replication data may include one or both of: one or more values for one or more operational parameters associated with the first operational state; and/or one or more navigation identifiers associated with the first operational state. The method can also include automatically controlling, by the computing system, a second computing device based on the screenshot replication data to cause the second computing device to operate in a second operational state, the second operational state being a replica of the first operational state. The method can include training a machine-learned reconstruction model using a set of supervised training data including a plurality of training pairs, each training pair comprising a training screenshot, training screenshot replication data, and a training reconstruction of the screenshot. The training screenshot replication data can include one or more training operational parameters and one or more training navigation parameters. The training reconstruction can include a reconstruction mapped to the training screenshot to render a training depiction of a dataset corresponding to the training reconstruction of the screenshot. The machine-learned reconstruction model can be trained to predict a reconstruction of the screenshot.

### BRIEF DESCRIPTION OF THE DRAWINGS

Detailed discussion of embodiments directed to one of ordinary skill in the art is set forth in the specification, which makes reference to the appended figures, in which:
Figure 1 is an example block diagram depicting an automation agent being trained to reconstruct a source of a screenshot performed by systems, and via methods therewith, according to example embodiments of the present disclosure.
Figure 2 is an example block diagram depicting reconstructions of website and mobile computing device application windows from screenshots according to example embodiments of the present disclosure.
Figure 3 depicts example reconstructions of website browser windows used to take screenshots according to example embodiments of the present disclosure.
Figure 4 depicts example reconstructions of mobile computing device application windows used to take screenshots according to example embodiments of the present disclosure.
Figure 5 depicts an environment with one or more service provider servers, one or more external servers, and one or more devices for exchanging one or more communications associated with one or more reconstructions of one or more screenshots, according to example embodiments of the present disclosure.
Figure 6 is a flow chart diagram illustrating an example method for reconstructing a source of a screenshot according to example implementations of aspects of the present disclosure.
Figure 7 is a flow chart diagram illustrating an example method for reconstructing a source of a screenshot according to example implementations of aspects of the present disclosure.
Figure 8 is a flow chart diagram illustrating an example method for reconstructing a source of a screenshot according to example implementations of aspects of the present disclosure.
Figure 9 is a flow chart diagram illustrating an example method for training a machine-learned model according to example implementations of aspects of the present disclosure;
Figure 10 is a block diagram of an example processing flow for using machine-learned model(s) to process input(s) to generate output(s) according to example implementations of aspects of the present disclosure;
Figure 11 is a block diagram of an example sequence processing model according to example implementations of aspects of the present disclosure;
Figure 12 is a block diagram of an example technique for populating an example input sequence for processing by a sequence processing model according to example implementations of aspects of the present disclosure;
Figure 13 is a block diagram of an example model development platform according to example implementations of aspects of the present disclosure;
Figure 14 is a block diagram of an example training workflow for training a machine-learned model according to example implementations of aspects of the present disclosure;
Figure 15 is a block diagram of an inference system for operating one or more machine-learned model(s) to perform inference according to example implementations of aspects of the present disclosure;
Figure 16 is a block diagram of an example networked computing system according to example implementations of aspects of the present disclosure;
Figure 17 is a block diagram of an example computing device according to example implementations of aspects of the present disclosure; and
Figure 18 is a block diagram of an example computing device according to example implementations of aspects of the present disclosure.

### DETAILED DESCRIPTION

Generally, the present disclosure is directed to computer-implemented systems and methods that leverage multiple models to perform reconstruction of source content depicted in screenshots. In particular, example systems can leverage screenshot replication data to reconstruct source content associated therewith, as well as associated states. The screenshot replication data, which can be associated with a first operational state in which a first device is operating, can be generated based on information depicted in the screenshots. Example systems can automatically control a second computing device based on the screenshot replication data to cause the second computing device to operate in a second operational state. The second operational state can be a replica of the first operational state.

In one example system, the screenshot can be processed by a machine-learned information extraction model to extract the screenshot replication data. The screenshot replication data can include values for operational parameters associated with the first operational state. The screenshot replication data can include navigation identifiers associated with the first operational state. The screenshot replication data can be processed with a machine-learned reconstruction model to generate a reconstruction of the screenshot. The reconstruction of the screenshot can be processed with a screen discrimination model to generate content extracted from the reconstruction and compare the extracted content with content depicted in the screenshot. The reconstruction can be presented by a user device (e.g., the second computing device) based on the content extracted from the reconstruction matching the content depicted in the screenshot.

The screenshot may include an image that depicts content displayed on a screen of the first computing device operating in the first operational state. The content may include user interface elements, which can be described by data included in the operational parameters. The operational parameters may include a current application being executed by the first computing device. The navigation identifiers can include a Uniform Resource Locator, an application menu hierarchy position, and/or a scroll position associated with the first operational state.

More particularly, while current screenshot processing techniques can be utilized to extract information from screenshots, accuracy and completeness of the extracted information are typically limited. Obtaining correct information depicted in screenshots relies on information that may or may not be depicted in the screenshots with sufficient clarity, completeness, and level of detail. These and other challenges in screenshot content extraction pose barriers to developing systems that are capable of achieving sufficient levels of quality. As such, alternative methods are needed for accurately and efficiently developing capable machine-learned models for screenshot information extraction.

The present disclosure provides solutions to these problems by combining together information extraction, screenshot reconstruction, and screen discrimination performed with machine-learned models for generating reconstructions of screenshots. More particularly, the present disclosure provides for extraction of information from a screenshot using a machine-learned information extraction model. The extracted information can be obtained from the screenshot, and possibly from contextual information in other programs and applications, such as those utilized for communications and/or transmitting/receiving data. According to the present disclosure, the extracted information can be utilized to obtain a reconstruction of the screenshot with an appropriate state. The state of source data in the reconstruction can be obtained through actions identified using content depicted in the screenshot. The reconstruction can be compared to the initial screenshot to confirm that the reconstruction was correctly obtained.

The state of the reconstruction can be achieved by various actions, such as activation of a series of buttons, HTML links, and/or other dynamic content. Automation of the activation of the dynamic content in the correct sequence can be utilized to achieve the state of the reconstruction. Alternatively or additionally, the state of the reconstruction may be achieved based on a successful login performed by a user and/or a request and acceptance of subscription, such as to a group chat and/or another type of communication channel. In some cases, a command may possibly be performed using the reconstruction based on a natural language inquiry received with the screenshot. The command may include, for example, obtaining a reservation, establishing a position in a transaction with limited availability, submitting a purchase order, or any other type of electronic or web-oriented command.

The present disclosure goes beyond mere automation of known processes and demonstrates improvements in the internal functioning of computers, the control of external technical processes, and/or the solutions of specific technical problems. Replicating screenshots using the machine-learned models according to the techniques discussed herein, improves efficiency of information submission and/or retrieval, enhances accuracy of information submission and/or retrieval, reduces numbers and sizes of network communications, reduces latency, increases network throughput especially during peak periods, improves data loss prevention, streamlines system state restoration, and optimizes automated and comprehensive testing.

By replicating the screenshots using the machine-learned models according to the techniques discussed herein, efficiency of information submission and/or retrieval is improved. Further, accuracy of information submission and/or retrieval is enhanced. Further, numbers and sizes of network communications are minimized.

Improved network communication efficiency, enhanced network communication accuracy, and minimized numbers and sizes of network communications are achieved by replicating the screenshots using the machine-learned models according to the techniques discussed herein. Communicating and processing screenshots used to generate replication data are significantly faster than communicating and processing large files or continuous data streams, such as video streams. The screenshots can be transmitted and used to easily and efficiently replicate operational states of computers during times at which screenshots are captured. In some cases, transmitting the screenshots includes transmitting only minimal amounts of data necessary for reconstructing the screenshots. Discrepancies and faulty determinations of the computer operational states during the times at which screenshots are captured may be minimized or prevented. Sizes of communications, especially for complex applications, may be significantly reduced.

By replicating the screenshots using the machine-learned models according to the techniques discussed herein, latency is reduced. Transmitting and processing screenshots and/or replication data, which are significantly faster than transmitting and processing large files or continuous video streams, results in lower latency in networks. Responsiveness and collaboration in experiences using the screenshots and/or the replication data exchanged between source and target devices are increased. Reliability and consistency of screenshots, and reconstruction data associated therewith, being transmitted, received, and/or processed are improved. Misidentification of operational states based on the screenshots and/or the reconstruction data is reduced, and possibly eliminated.

Amounts of data communications exchanged with the screenshots used by the machine-learned models to generate replications according to the techniques discussed herein are minimized in comparison to data communications exchanged in conventional systems. By only transmitting the minimal data necessary, such as the screenshot and/or the replication data, network bandwidth usage and latency are minimized, especially with regard to communications associated with complex applications. Network bandwidth usage and latency are minimized during peak periods of network usage, enabling communication of high priority data to be optimized. Moreover, in contrast to existing systems in which both screenshots and relatively large amounts of meta information need to be exchanged in order for the screenshots to be utilized for various types of operations, transmitting screenshots utilized to generate reconstructions according to the techniques discussed herein enables screenshot-oriented communications to be provided with relatively lower amounts of additional meta information. The reconstructions can be utilized according to the techniques discussed herein to generate and/or identify information that may otherwise need to be transmitted according to conventional technology. As a result, exchanging the screenshots, and generating the reconstructions therewith, conserves network bandwidth and improves network performance.

Computer, network, and storage resources are conserved by operators that utilize the screenshots, and/or the reconstruction data generated by the machine-learned models according to the techniques discussed herein. Tasks required to be performed by computers and networks utilized for troubleshooting, operation, and/or support are minimized. Utilizing the screenshots, and/or the reconstruction data, enables the operators to efficiently and accurately obtain information regarding operational states, and/or to utilize the computers and/or networks to perform operations therewith. Duplication. and/or redundancy of, operations performed by the computers and/or networks are minimized.

By replicating the screenshots using the machine-learned models according to the techniques discussed herein, data loss prevention and/or system restoration can be improved. Data loss can be minimized by periodically capturing screenshots utilized to restore application states. System operational states immediately prior to crashes can be obtained utilizing the screenshots. Data loss is minimized using operational states obtained by screenshots captured prior to crashes.

System restoration can be performed more accurately by using the screenshots to generate replication data of operational states of computers with which the screenshots are associated. Communications associated with the operational states of the computers with which the screenshots are associated are optimized in comparison to communications of existing systems that are required to transmit large amounts of data to capture the operational states. Amounts and sizes of communications associated with the operational states of the computers with which the screenshots are associated are minimized.

By optimizing communications associated with the operational states of the computers with which the screenshots are associated, system failure recovery is improved. System failure recovery is improved by minimizing amounts and/or sizes of communications associated with the operational states of the computers with which the screenshots are associated. Minimizing communications associated with the operational states of the computers with which the screenshots are associated increases overall reliability and efficiency of computers capturing and/or processing the screenshots.

By replicating the screenshots using the machine-learned models according to the techniques discussed herein, system state restorations after system crashes can be performed more quickly and efficiently. Improved system state restorations can be performed in various ways. Operational states of computer systems experiencing crashes (e.g., operating system failures, power outages, etc.) during operations performed via complex applications can be restored efficiently utilizing the screenshots. By reconstructing the screenshots according to the techniques discussed herein, operational states, possibly with unsaved changes to complex applications, that can be inferred. The computers can be utilized to restore the operational states efficiently and accurately.

By replicating the screenshots using the machine-learned models according to the techniques discussed herein, automated and comprehensive testing can be optimized. Systems can automatically test all possible operational states of applications running when the screenshots are generated. The reconstruction data generated using the screenshots according to the techniques discussed herein enables testing of the computers with which the screenshots are captured to be optimized. Screenshots can be transmitted and used to reconstruct operational states according to the techniques discussed herein, more efficiently than transmitting entire design files or continuous video streams according to conventional technology. The screenshots and reconstruction data can be used to identify the operational states more quickly, efficiently, and accurately than by using design files and/or video streams as in conventional systems.

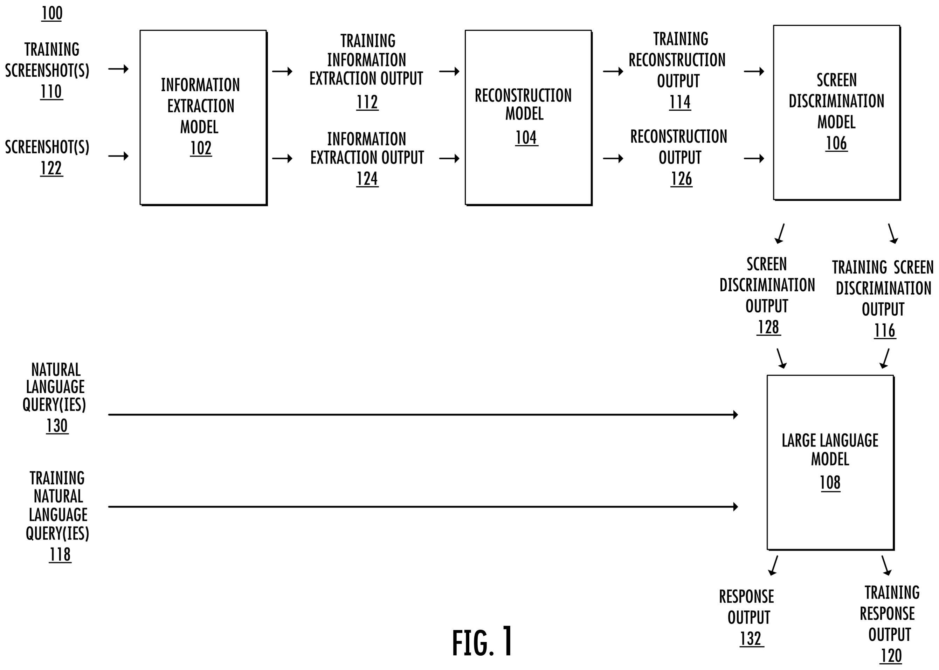

Figure 1 is an example block diagram depicting an automation agent 100 being trained to reconstruct a source of a screenshot performed by systems, and via methods therewith, according to example embodiments of the present disclosure. The automation agent 100 can include one or more machine-learned models, including an information extraction model (or "extraction model") 102, a reconstruction model 104, a screen discrimination model (or "discrimination model") 106, and/or a large language model 108.

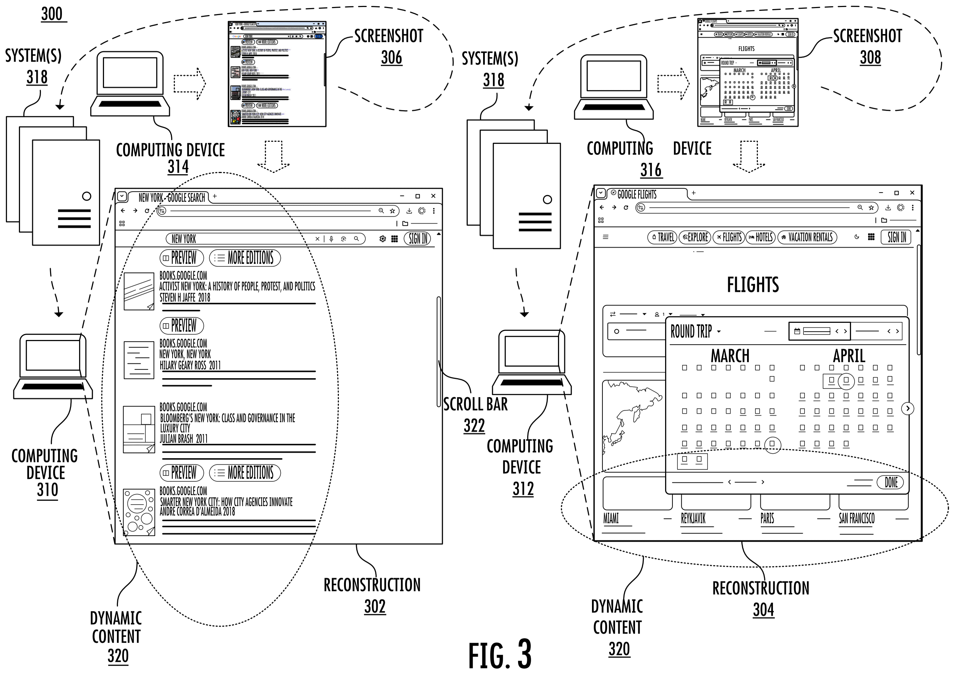

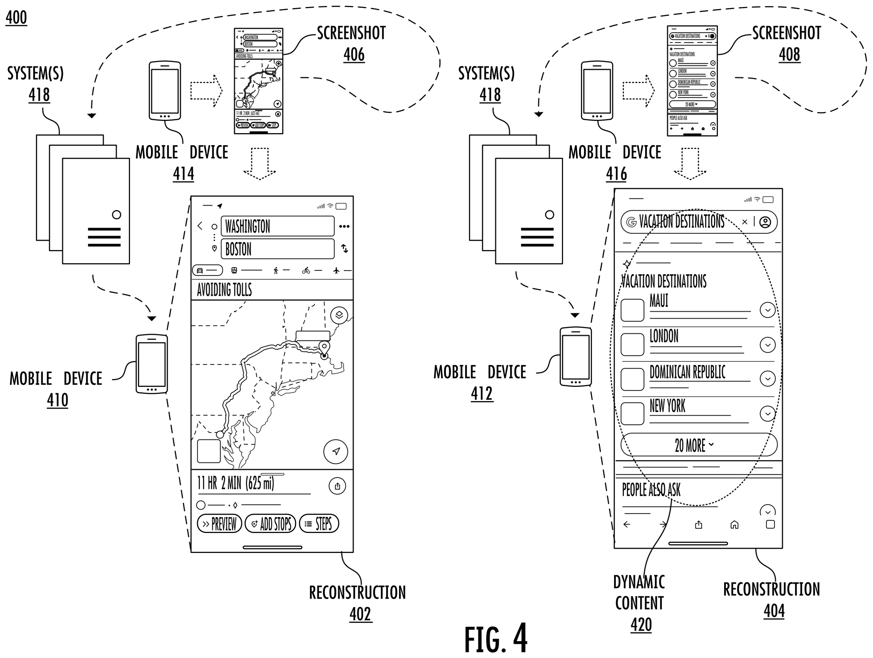

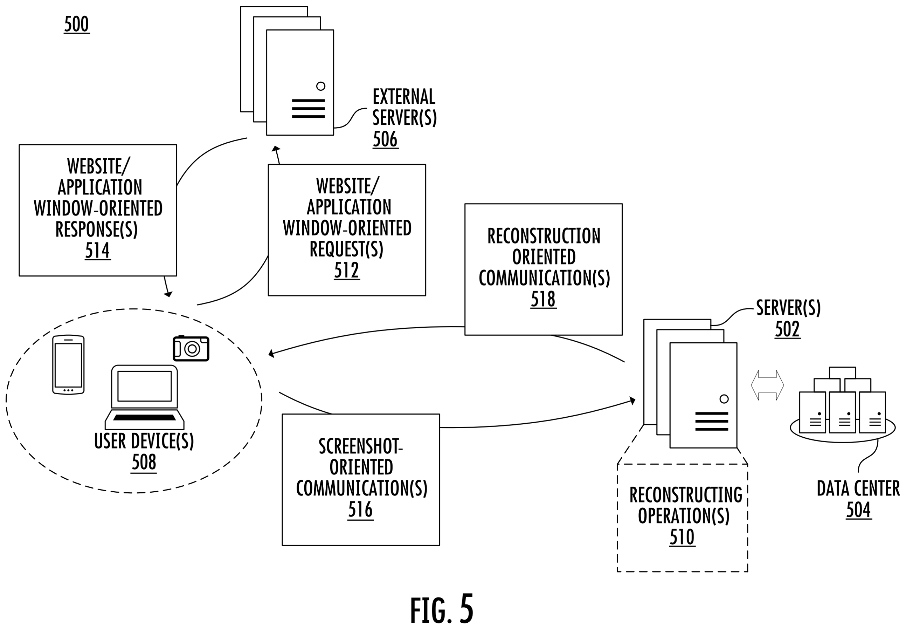

In one example system, a screenshot (e.g., any of the screenshot(s) 122, as discussed below in further detail) can be processed by the extraction model 102 to extract information extraction information (or "extraction information") (e.g., information extraction output 124, as discussed below in further detail) output from the extraction model 102. The extraction information can be utilized to identify, by the reconstruction model 104, screenshot replication information (e.g., the reconstruction output 126, as discussed below in further detail). The replication information can include values for operational parameters associated with a first operational state of a first computing device (e.g., any of the computing device(s) 314/316 and/or the mobile device(s) 414/416, as discussed below in further detail with reference to Figures 3 and 4, respectively, and/or any of the user device(s) 508, as discussed below in further detail with reference to Figure 5) utilized to generate the screenshot. The first computing device can include any type of computing and/or mobile device, any other type of device, or any combination thereof.

The replication information can include operational information (e.g., information and/or data associated with operation of the first computing device while the screenshot is taken). The operational information can include one or more values for one or more operational parameters associated with the first operational state. The one or more values for the one or more operational parameters can include one or more of a current application being executed by the first computing device and data describing one or more user interface elements contained within content output by the first computing device.

The replication information can include navigation information (e.g., information and/or data associated with navigation of the website/application by the first computing device while the screenshot is taken). The navigation information can include one or more navigation identifiers associated with the first operational state. The one or more navigation identifiers can include one or more of: a Uniform Resource Locator, an application menu hierarchy position, and a scroll position associated with the first operational state.

The screenshot replication data can include various types of data. For example, the screenshot replication data can include navigation identifiers associated with the first operational state. The screenshot replication data can be processed with the reconstruction model 104 to generate a reconstruction of the screenshot. The reconstruction of the screenshot can be processed with the discrimination model 106 to generate content, such as screen discrimination information (or "discrimination information") (e.g., the screen discrimination output 128, as discussed below in further detail) extracted from the reconstruction and compare the extracted content with content depicted in the screenshot.

The reconstruction can be analyzed by the large language model 108 and utilized to present response information (e.g., the response output 132, as discussed below in further detail), including the reconstruction, by a user device, such as a computing device (or "second computing device") (e.g., any of the computing device(s) 310/312 and/or the mobile device(s) 410/412, as discussed below in further detail with reference to Figures 3 and 4, respectively, and/or any of the user device(s) 508, as discussed below in further detail with reference to Figure 5) based on the content extracted from the reconstruction matching the content depicted in the screenshot. The response information can include any type of response information and/or data generated and/or identified based on analysis of the discrimination output. The second computing device, which can include the first computing device or another device, can include any type of computing and/or mobile device, any other type of device, or any combination thereof.

The response information (e.g., the reconstruction; and/or information and/or data associated therewith) can be utilized to present the reconstruction by the second computing device. The reconstruction can be presented based on the screenshot, the extraction information, the reconstruction information, the discrimination information, the response information, any other types of screen reconstruction related information/data, or any combination thereof.

The screenshot can be utilized in various ways to generate information (e.g., the response information) utilized to reconstruct the screenshot, such as to output a webpage/application screen at a same scroll position. The screenshot can be reconstructed to output the webpage/application screen with the same interface elements depicted in the screenshot, such as any interface elements in the initial content (e.g., depicted in the screenshot) output based on any type of user input. The screenshot may include an image that depicts content displayed on a screen of the first computing device operating in the first operational state. The content may include user interface elements, which can be described by data included in the operational parameters. The operational parameters may include a current application being executed by the first computing device. The navigation identifiers can include a Uniform Resource Locator ("URL"), an application menu hierarchy position, and/or a scroll position associated with the first operational state.

Various types of training input/output similar to, and/or including, the screenshot, the extraction information, the reconstruction information, the discrimination information, and/or the response information can be utilized to train the extraction model 102, the reconstruction model 104, the discrimination model 106, and/or the large language model 108, respectively. For example, the extraction model 102, the reconstruction model 104, the discrimination model 106, and/or the large language model 108 can be trained based on one or more training screenshots, training extraction information (e.g., one or more training extractions; and/or information and/or data associated therewith), training reconstruction information (e.g., one or more training reconstructions; and/or information and/or data associated therewith), training discrimination information (e.g., one or more training discriminations; and/or information and/or data associated therewith), and/or training response information (e.g., one or more training responses; and/or information and/or data associated therewith).

The training input/output, such as the training screenshot(s), the training extraction information, the training reconstruction information, training discrimination information, and/or training response information can be utilized to train any of the model(s) of the automation agent 100 in various ways. For example, the extraction model 102, the reconstruction model 104, and/or the discrimination model 106 can be trained to be a trained extraction model 102, a trained reconstruction model 104, a trained discrimination model 106, and/or a trained large language model 108, respectively.

By way of example, training of the information extraction model 102 can be performed in various ways. The information extraction model 102 can receive one or more training screenshots 110 utilized to train the machine-learned model(s). For example, training screenshot data, including the training screenshot(s) 110, can be received as input to the information extraction model 102. The training screenshot(s) 110 can be utilized to train the information extraction model 102, such as to generate training information extraction output 112.

The information extraction model 102 can be trained using one or more portions of the training screenshot data and one or more portions of the training screenshot extraction information. The training screenshot data can include a plurality of training screenshots, and data associated therewith. The portion(s) of training screenshot extraction information can include one or more identifiers associated with the screenshot(s), one or more groups of pixels in the screenshot(s), and/or any other data associated with the screenshot(s) and/or the identifier(s). The identifier(s) can be associated with one or more portrayals (e.g., portrayals of user interface elements such as links, objects, images, etc., or any combination thereof) in the group(s) of pixels.

The information extraction model 102 can be trained using a set of supervised training data including a plurality of training pairs. Each training pair can include a training screenshot 122 and training information identifying the training screenshot 122. The training information can include one or more training operational parameters and one or more training navigation identifiers.

The information extraction model 102 can be trained based on the portion(s) of training screenshot data and the portion(s) of training screenshot extraction information. For example, the information extraction model 102 can detect that an initial example output (e.g., associated with a corresponding training screenshot 110) mentions one of the portion(s) of training screenshot data. The information extraction model 102 can, in response to the detecting, add additional content to the initial example output that references the training screenshot extraction information portion(s) relative to the one of the portion(s) of training screenshot data (e.g., the training screenshot(s) 110 and/or one or more other training screenshots) mentioned in the initial example output. The initial example output from the information extraction model 102, including the additional content, can be included in the training information extraction output 112.

The reconstruction model 104 can receive the training information extraction output 112. For example, the training information extraction output 112 can be received as input to the reconstruction model 104. The training information extraction output 112 can be utilized to train the reconstruction model 104, such as to generate training reconstruction output 114.

The reconstruction model 104 can be trained using one or more portions of the training information extraction output 112, and one or more training reconstruction portions. The training reconstruction portion(s) can include one or more training user interface elements, such as one or more training static user interface elements (e.g., training actionable static user interface elements, training non-actionable static user interface elements, , etc., or any combination thereof), one or more training dynamic user interface elements (e.g., training actionable dynamic user interface elements, training non-actionable dynamic user interface elements, etc., or any combination thereof), and/or other content/user interface elements.

For example, the reconstruction model 104 can detect that an initial example output (e.g., initial example reconstruction output being associated with the corresponding training screenshot 110) mentions one of the portion(s) of the training information extraction output 112. The reconstruction model 104 can, in response to the detecting, add additional content to the initial example output that references the training reconstruction portion(s) relative to the one of the portion(s) of the training information extraction output 112 mentioned in the initial example output. The initial example output from the reconstruction model 104, including the additional content, can be included in the training reconstruction output 114.

The reconstruction model 104 can be trained using a set of supervised training data including a plurality of training pairs. Each training pair can include a training screenshot 110, training screenshot replication data, and a training reconstruction of the training screenshot 110. The training screenshot replication data can include one or more training operational parameters and one or more training navigation parameters. The training reconstruction can include a reconstruction mapped to the training screenshot to render a training depiction of a dataset corresponding to the training reconstruction of the training screenshot 110.

The training information extraction output 112 can include any of various other types of training data and/or training information associated with the automation agent 100. For example, the training information extraction output 112 can include any section (e.g., a partial section or an entire section) of the training screenshot(s) 110.

The screen discrimination model 106 can receive the training reconstruction output 114. For example, the training reconstruction output 114 can be received as input to the screen discrimination model 106. The training reconstruction output 114 can be utilized to train the screen discrimination model 106, such as to generate training screen discrimination output 116.

The screen discrimination model 106 can be trained using one or more portions of the training reconstruction output 114, and one or more training screen discrimination portions. For example, the screen discrimination model 106 can detect that an initial example output (e.g., initial example screen discrimination output being associated with the corresponding training screenshot 110) mentions one of the portion(s) of the training reconstruction output 114. The screen discrimination model 106 can, in response to the detecting, add additional content to the initial example output that references the training screen discrimination portion(s) relative to the one of the portion(s) of the training reconstruction output 114 mentioned in the initial example output. The initial example output from the screen discrimination model 106, including the additional content, can be included in the training screen discrimination output 116.

The training reconstruction output 114 can include any of various other types of training data and/or training information associated with the automation agent 100. For example, the training reconstruction output 114 can include any section (e.g., a partial section or an entire section) of the training information extraction output 112, and/or any section (e.g., a partial section or an entire section) of the training screenshot(s) 110.

The large language model 108 can receive the training screen discrimination output 116. For example, the training screen discrimination output 116 and one or more training natural language queries 118 can be received as input to the large language model 108. The training screen discrimination output 116 can be utilized to train the large language model 108, such as to generate training response output 120.

The large language model 108 can generate the training response output 120 based on the training screen discrimination output 116, or regardless of any training screen discrimination output. For example, according to one or more settings of a computing system, the trained large language model 108 can be controlled to generate the training response output 120 by using the training screen discrimination output 116, or by disregarding any training screen discrimination output. The second computing device can be controlled to operate in the second operational state by using (e.g., and, in some cases, by requiring) the training screen discrimination output 116, or by disregarding any training screen discrimination output.

The large language model 108 can be trained using one or more portions of the training screen discrimination output 116, and one or more training responses . For example, the large language model 108 can detect that an initial example output (e.g., initial example response output) mentions one of the portion(s) of the training screen discrimination output 116 and a single section (e.g., being associated with the corresponding training screenshot 110) of the training natural language query(ies) 118, such as a single training query 118. The large language model 108 can, in response to the detecting, add additional content to the initial example output that references the training response(s) relative to the one of the portion(s) of the training screen discrimination output 116 and the training query 118 mentioned in the initial example output. The initial example output from the large language model 108, including the additional content, can be included in the training response output 120.

The training screen discrimination output 116 can include any of various other types of training data and/or training information associated with the automation agent 100. For example, the training screen discrimination output 116 can include any section (e.g., a partial section or an entire section) of the training reconstruction output 114, any section (e.g., a partial section or an entire section) of the training information extraction output 112, and/or any section (e.g., a partial section or an entire section) of the training screenshot(s) 110.

The training response output 120 can include any of various other types of training data and/or training information associated with the automation agent 100. For example, the training response output 120 can include any section (e.g., a partial section or an entire section) of the training natural language query(ies) 118, any section (e.g., a partial section or an entire section) of the training screen discrimination output 116, any section (e.g., a partial section or an entire section) of the training reconstruction output 114, any section (e.g., a partial section or an entire section) of the training information extraction output 112, and/or any section (e.g., a partial section or an entire section) of the training screenshot(s) 110

The trained information extraction model 102 can receive one or more screenshots 122. The trained information extraction model 102 can analyze the screenshot(s) 122 input into the trained information extraction model 102 and generate information extraction output 124. The information extraction output 124 can include one or more sections of information (or "section(s) of the information extraction output 124) extracted associated with (e.g., based on) one or more corresponding sections of the screenshot(s) 122. For example, a section (e.g., being associated with a corresponding screenshot 122) of the information extraction output 124 can identify (e.g., as text, one or more pixels, etc., or any combination thereof) information associated with a corresponding section (e.g., a group of pixels) of a screenshot 122.

The information extraction output 124 can include any of various other types of data and/or information associated with the automation agent 100. For example, the information extraction output 124 can include any section (e.g., a partial section or an entire section) of the screenshot(s) 122.

The trained reconstruction model 104 can receive the information extraction output 124. The trained reconstruction model 104 can analyze the information extraction output 124 input into the trained reconstruction model 104 and generate reconstruction output 126. The reconstruction output 126 can include one or more sections of information reconstructed from one or more corresponding sections of the information extraction output 124. For example, a section (e.g., being associated with the corresponding screenshot 122) of the reconstruction output 126 can identify (e.g., as text, a link, a static content flag or a dynamic content flag, etc., or any combination thereof) information associated with (e.g., based on) a corresponding information extraction output section (e.g., a corresponding section of the information extraction output 124).

The reconstruction output 126 can include any of various other types of data and/or information associated with the automation agent 100. For example, the reconstruction output 126 can include any section (e.g., a partial section or an entire section) of the information extraction output 124, and/or any section (e.g., a partial section or an entire section) of the screenshot(s) 122.

The trained reconstruction model 104 generating the output can include a series of control actions (e.g., one or more control actions) (or "actions") a page location action, an application menu hierarchy position action, and/or a scroll position action. For instance, one or more control actions can be identified and/or performed based on one or more corresponding control actions used to generate the content depicted in a screenshot 122. The action(s) in the output of the trained reconstruction model 104, and/or used to perform the reconstruction therewith, can duplicate and/or match the corresponding action(s) used to generate the content depicted in the screenshot 122.

Various types of actions may be associated with the content depicted in the screenshot 122. In some examples, the corresponding action(s) used to generate the content depicted in the screenshot 122 can include one or more actions performed in response to receiving one or more selections as user input to the first computing device. Alternatively or additionally, the corresponding action(s) used to generate the content depicted in the screenshot 122 can include one or more automated actions performed by the first computing device and/or one or more servers (e.g., the external server(s) 506, as discussed below with reference to Figure 5).

The trained screen discrimination model 106 can receive the reconstruction output 126. The trained screen discrimination model 106 can analyze the reconstruction output 126 input into the trained screen discrimination model 106 and generate screen discrimination output 128. The screen discrimination output 128 can include one or more sections of information (e.g., discrimination information) based on a comparison between one or more corresponding sections of the reconstruction output 126 and one or more corresponding sections of the information extraction output 124, respectively.

For example, a section (e.g., being associated with the corresponding screenshot 122) of the screen discrimination output 128 can identify (e.g., as a set flag or a flag set to positive to reflect a similarity level above or equal to a similarity threshold; an unset flag or a flag set to negative to reflect a similarity level less than a similarity threshold, a confidence value reflecting a likelihood of a match, etc., or any combination thereof) information associated with (e.g., based on) a corresponding reconstruction output section (e.g., a corresponding section of the reconstruction output 126) and a corresponding information extraction output section (e.g., a corresponding section of the information extraction output 124). The section of the screen discrimination output 128 can be utilized to identify whether a corresponding section of the reconstruction output 126 matches a corresponding section of the information extraction output 124.

The screen discrimination output 128 can include any of various other types of data and/or information associated with the automation agent 100. For example, the screen discrimination output 128 can include any section (e.g., a partial section or an entire section) of the reconstruction output 126, any section (e.g., a partial section or an entire section) of the information extraction output 124, and/or any section (e.g., a partial section or an entire section) of the screenshot(s) 122.

The trained large language model 108 can receive the screen discrimination output 128 and one or more natural language queries 130. In some cases, a section of the natural language query(ies) 130, such as a single query 130, may be associated with the corresponding screenshot 122. For instance, the query 130 and the corresponding screenshot 122 may be received as a section of input, such as an input pair.

The trained screen discrimination model 106 can analyze the screen discrimination output 128 input into the trained large language model 108 and generate response output 132. The response output 132 can include one or more sections of information based on one or more corresponding sections of the screen discrimination output 128. For example, a section of the response output 132 may include a corresponding section of the reconstruction output 126 based on a corresponding section (e.g., as a set flag or a flag set to positive to reflect a similarity level above or equal to a similarity threshold; an unset flag or a flag set to negative to reflect a similarity level less than a similarity threshold, a confidence value reflecting a likelihood of a match, etc., or any combination thereof) information associated with (e.g., based on) of the screen discrimination output 128 indicating that a corresponding reconstruction output section (e.g., a corresponding section of the reconstruction output 126) matches a corresponding information extraction output section (e.g., a corresponding section of the information extraction output 124).

The trained large language model 108 can generate the response output 132 based on the screen discrimination output 128, or regardless of any screen discrimination output. For example, according to one or more settings of a computing system, the large language model 108 having been trained can predict information (e.g., including one or more reconstructions, such as in the reconstruction output 126) identifying one or more screenshots. For instance, in such an example or another example, the trained large language model 108 can be controlled to generate the response output 132 by using the screen discrimination output 128, or by disregarding any screen discrimination output. The second computing device can be controlled to operate in the second operational state by using (e.g., and, in some cases, by requiring) the screen discrimination output 128, or by disregarding any screen discrimination output.

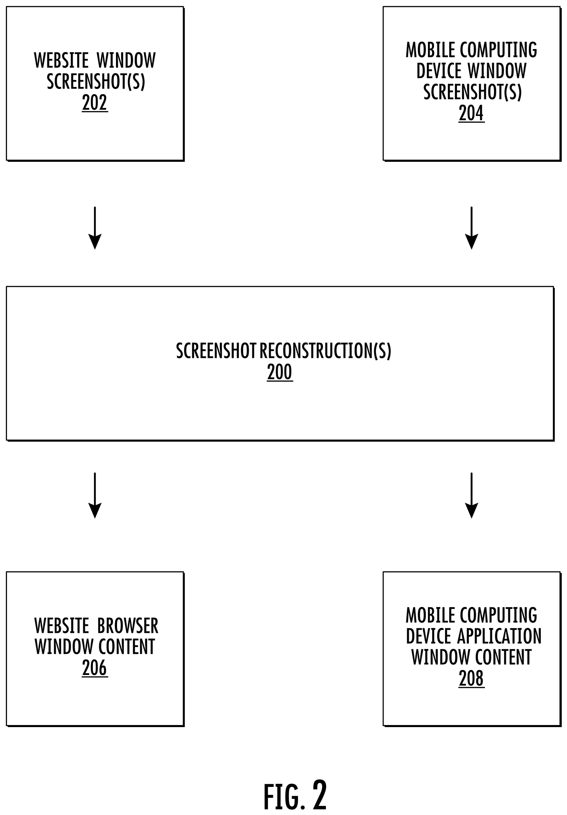

Figure 2 is an example block diagram depicting reconstructions of website and mobile computing device application windows from screenshots according to example embodiments of the present disclosure. One or more reconstructions 200, such as the reconstructions of website and mobile computing device application windows from screenshots, can be generated.

Various types of data can be utilized to generate the reconstruction(s) 200. In some cases, the reconstruction(s) 200 can be generated based on one or more website window screenshots 202 and/or one or more mobile computing device window screenshots 204. The screenshot reconstruction(s) 200 can be utilized to manage (e.g., identify, determine, obtain, evoke, retrieve, update, clear, refresh, delete, etc.) website browser window content 206 and/or mobile computing device application window content 208.

In some examples, any of the reconstruction(s) 200, such as a single reconstruction 200, may be implemented using any response output (e.g., any corresponding section of the response output 132, as discussed above with reference to Figure 1). In those or other examples, any section of the website window screenshot(s) 202, such as a single website window screenshot 202, may be implemented using any response output (e.g., any corresponding section of the response output 132, as discussed above with reference to Figure 1). The response output can include, for instance, any section (e.g., any partial section or any entire section) of the website browser window content 206. The website browser window content 206 can include, and/or be included in, a computing device window. The website browser window content 206 can include, and/or be included in, a single portion of a single computing device window (e.g., matching a single corresponding portion of a single computing device window depicted in a corresponding screenshot 202).

In those or other examples, any section (e.g., any partial section or any entire section) of the mobile computing device window screenshot(s) 204, such as a single computing device window screenshot 204, may be implemented using any response output (e.g., any corresponding section of the response output 132, as discussed above with reference to Figure 1). The response output can include, for instance, any section (e.g., any partial section or any entire section) of a mobile computing device application window, such as a single portion of a single mobile computing device application window (e.g., matching a single corresponding portion of a single mobile computing device application window depicted in a corresponding screenshot 204). The mobile computing device application window content 208 can include, and/or be included in, a mobile computing device application window. The mobile computing device application window content 208 can include, and/or be included in, a single portion of a single mobile computing device application window (e.g., matching a single corresponding portion of a single mobile computing device application depicted in a corresponding screenshot 204)

In those or other examples, any of the screenshot(s) 202/204 may be implemented using any screenshot (e.g., any corresponding screenshot 122, as discussed above with reference to Figure 1). In those or other examples, any of the screenshot(s) 202/204, such as website window screenshot 202 and/or a mobile computing device window screenshot 204, may be implemented using any screenshot (e.g., any corresponding screenshot 122, as discussed above with reference to Figure 1) depicting content of any type. ). In those or other examples, any of the screenshot(s) 202/204, such as website window screenshot 202 and/or a mobile computing device window screenshot 204, may be implemented using any screenshot depicting content output by any type of device.

Figure 3 depicts example reconstructions 300 of screenshots of website browser windows according to example embodiments of the present disclosure. The reconstructions 300 can include a reconstruction 302, a reconstruction 304, one or more other reconstructions, or any combination thereof. The reconstruction(s) 302/304 can be associated with one or more screenshots 306 and/or 308, respectively, utilized to generate the reconstruction(s) 302/304. The reconstruction(s) 302/304 can be associated with one or more computing devices 310 and/or 312 utilized to present, by one or more displays of the computing device(s) 310/312, the reconstruction(s) 302/304, respectively.

The screenshot(s) 306/308 can be associated with one or more computing devices 314 and/or 316 utilized to generate the screenshot(s) 306/308, portraying one or more portions of one or more screens of the computing device(s) 314/316, respectively. For example, individual ones of the screenshot(s) 306/308 can include a representation of a portion of a website window, such as a window presented in a browser and by a corresponding device of the computing device(s) 314/316.

Individual ones of the screenshot(s) 306/308 can be obtained by one or more systems 318 utilized to manage an automation agent (e.g., the automation agent 100, as discussed above with reference to Figure 1). Individual ones of the screenshot(s) 306/308 can be obtained by the system(s) 318, via input to the system(s) 318. Individual ones of the screenshot(s) 306/308 can include an image that depicts content displayed on a corresponding screen of a corresponding display of the computing device(s) 314/316. The image depicting content in a corresponding screenshot can be displayed by the corresponding device of the computing device(s) 314/316 operating in an operational state (or "first operational state").

The system(s) 318 can process the screenshot(s) 306/308 with one or more machine-learned information extraction models (e.g., the information extraction model 102, as discussed above with reference to Figure 1). The system(s) 318 can generate, in response to the processing of the screenshot(s) 306/308, an output of the machine-learned information extraction model. The output can include screenshot replication data. The screenshot replication data can include one or more values for one or more operational parameters associated with the first operational state. Alternatively or additionally, the screenshot replication data can include the navigation identifier(s) associated with the first operational state. Alternatively or additionally, the screenshot replication data can include one or more types of other data and/or information.

Individual ones of the computing device(s) 310/312 (or "second computing device) can operate in an operational state (or "second operational state"), based on the screenshot replication data. The second operational state may be, and/or may include, a replica of the first operational state. In some examples, the system(s) 318 can automatically control (e.g., to one or more corresponding scroll positions) individual ones of the computing device(s) 310/312, based on the screenshot replication data, to operate in the second operational state.

The screenshot replication data can include the one or more values for the one or more operational parameters associated with the first operational state. The one or more values for the one or more operational parameters can include one or more of a current application being executed by a corresponding device of the computing device(s) 314/316. The value(s) for the operational parameter(s) can include one or more of the current application being executed at the time at which the corresponding screenshot from among the screenshot(s) 306/308 is taken. Alternatively of additionally, the value(s) for the operational parameter(s) can include data describing one or more user interface elements contained within the content (e.g., the content displayed by a corresponding device of the computing device(s) 314/316 at a time at which the corresponding screenshot from among the screenshot(s) 306/308 is taken).

The screenshot replication data can include the navigation identifier(s) associated with the first operational state. The navigation identifier(s) can include a computing device identification identifier, a Uniform Resource Locator and/or an application menu hierarchy position. Alternatively or additionally, the navigation identifier(s) can include a scroll position associated with the first operational state, and/or one or more other identifiers of any type.

The system(s) 318 can process the screenshot replication data with one or more machine-learned reconstruction models (e.g., the reconstruction model 104, as discussed above with reference to Figure 1) to generate, as an output of the machine-learned reconstruction model, a series of control actions. Individual ones of the series of control actions can be used by a corresponding device of the computing device(s) 310/312 to navigate from a current operational state to the second operational state. In some examples, the system(s) 318 can use individual ones of the series of control actions to cause the corresponding device of the computing device(s) 310/312 to navigate to the second operational state.

Individual ones of the computing device(s) 310/312 can perform the series of control actions. In some examples, the system(s) 318 can automatically control a corresponding device of the computing device(s) 310/312, based on the series of control actions, to cause the corresponding device to navigate to the second operational state.

The system(s) 318 can process the screenshot(s) 306/308 and various types of data associated with the computing device(s) 314/316. For example, the system(s) 318 can process, with one or more screen discrimination models (e.g., the screen discrimination model 106, as discussed above with reference to Figure 1), the screenshot(s) 306/308 and data descriptive of a corresponding device of the computing device(s) 310/312. The system(s) 318 can, based on one or more results of the processing, generate difference information. The difference information can include information and/or data identifying individual interface elements of the reconstruction are similar to, the same as, or different from, corresponding individual interface elements utilized to generate content (e.g., website content, mobile application content, any other type of content, utilized to generate the screenshot(s) 306/308) output by the computing device(s) 314/316 in the first operational state). The system(s) 318 can generate, as an output of the screen discrimination model(s), the difference data. The difference data may indicate whether the second operational state successfully replicates the first operational state.

The screenshot(s) 306/308 can be processed in various ways. The system(s) 318 can process the screenshot(s) 306/308 by mapping the navigation identifier(s) to one or more actions affecting the replica of the first operational state on the corresponding device of the computing device(s) 310/312. Individual ones of the computing device(s) 310/312 can perform the action(s). In some examples, the system(s) 318 can automatically control the second computing device to perform the action(s).

The screenshot(s) 306/308 can be analyzed and used to replicate the first operational state on the corresponding device of the computing device(s) 310/312 operating in the second operational state. By way of example, the extraction data associated with content output by the computing device(s) 310/312 in the first operational state can be mapped (e.g., by the system(s) 318) to real-time replication data, such as data generated based on the reconstruction data (e.g., the reconstruction(s); and/or the information and/or the data associated therewith). The real-time replication data may be associated with the second operational state. The real-time replication data may be utilized to identify whether the real-time replication data matches initial content output by the computing device(s) 314/316 utilized to generate the screenshot(s) 306/308.

The screenshot replication data associated with the first operational state can also be mapped to real-time replication data associated with the second operational state. The mapping of the screenshot replication data associated with the first operational state being mapped to real-time replication data can be performed to identify whether the screenshot replication data associated with the first operational state matches the real-time replication data.

Reconstructing the screenshot(s) 306/308 can be managed (e.g., realized, effected, controlled, performed, etc.) in various ways. Reconstructing can be performed by the computing device(s) 310/312, the system(s) 318, and/or one or more other devices and/or systems. Reconstructing can include presenting the reconstruction(s) 302/304 by the computing device(s) 310/312. In some cases, reconstructing can be automatically controlled by the system(s) 318. For example, reconstructing can include the corresponding device of the computing device(s) 310/312 reconstructing, and/or being automatically controlled to reconstruct, a scroll position of a website. Alternatively or additionally, reconstructing can include the corresponding device of the computing device(s) 310/312 reconstructing, and/or being automatically controlled to generate, a reconstruction (e.g., one of the reconstruction(s) 302/304) of the screenshot (e.g., one of the screenshot(s) 306/308). For instance, the reconstruction can be generated by the computing device(s) 310/312 presenting and/or scrolling (e.g., automatically) the website to the scroll position.

The interface element(s) of the corresponding device of the computing device(s) 310/312 can be managed (e.g., identified, determined, controlled, selected, activated, etc.) to perform the reconstructing. In some examples, reconstructing can include the system(s) 318 identifying a portion of a corresponding screenshot of the screenshot(s) 306/308 representing user interface elements of a website. In response to identifying the portion of the corresponding screenshot, the system(s) 318 can identify the user interface elements of the website. The reconstruction can be generated by the corresponding device of the computing device(s) 310/312 presenting the reconstruction of the website matching the corresponding screenshot of the screenshot(s) 306/308.

The reconstruction (e.g., one of the reconstruction(s) 302/304) of the website corresponding to the corresponding screenshot of the screenshot(s) 306/308 can be generated by managing the website in various ways. For example, the reconstruction of the website matching the corresponding screenshot of the screenshot(s) 306/308 can be generated by presenting the website. Alternatively or additionally, the reconstructing can include scrolling the website. Alternatively or additionally, the reconstructing can include activating one or more active user interface elements. Alternatively or additionally, the reconstructing can include presenting one or more static user interface elements (e.g., actionable and/or non-actionable static user interface elements). Static content of the reconstruction(s) 302/304 can be the same as corresponding static content of the corresponding screenshot 306/308. Alternatively or additionally, static content of the reconstruction(s) 302/304 can be possibly different from corresponding static content of the corresponding screenshot 306/308 (e.g., such as if updates were made to content used for the reconstruction(s) 302/304 after the screenshot(s) 306/308 were captured). Alternatively or additionally, the reconstructing can include presenting dynamic content 320, such as one or more dynamic user interface elements (e.g., actionable and/or non-actionable dynamic user interface elements), and/or presenting various other content by the corresponding device of the computing device(s) 310/312. The dynamic content 320 can be the same as or different from corresponding dynamic content of the corresponding screenshot 306/306.

The user interface elements can include one or more dynamic and/or static elements of various types. The user interface elements can include the dynamic element(s), which may include one or more fields and/or various other elements. The dynamic element(s) can include one or more fields/elements being observed and/or controlled by the corresponding user. The dynamic element(s) can be controlled according to specified conditions, such as user input (e.g., via one or more selections, such as one or more user selections). Dynamic user interface content, which can include the dynamic element(s), can be controlled based on the selection(s) associated with one or more choices made by the corresponding user. The selection(s) can be utilized (e.g., by the computing device(s) 314/316 and/or more server(s) associated with content output by the computing device(s) 314/316) to drive the dynamic element(s) (e.g., one or more controls) displayed so that only relevant fields/elements are presented.

The user interface elements can include one or more actionable and/or non-actionable elements of various types.

The reconstruction(s) 302/304 can include one or more scroll bars (e.g., any number of scroll bars that are, individually, horizontal, vertical, diagonal, etc.), which can be used to scroll an entire section of a window or a partial section of a window, etc. For example, the scroll bar(s) can include a scroll bar 322. The scroll bar 322 may be positioned (e.g., based on user input) to represent the reconstruction 302 having a window scrolled partially down. A position of the scroll bar 322 may correspond to a position of a scroll bar of a window depicted in the screenshot 306.

The reconstruction(s) 302/304 can include content based on various selections. For example, the reconstruction(s) 302/304 can include content based on one or more selections matching, and/or similar to, one or more corresponding selections received from a corresponding user and by the corresponding device of the computing device(s) 314/316. The selection(s) can include any number of selections of various types, such as one or more key strokes, one or more mouse clicks, one or more scroll button scrolls, one or more various other activations associated with user interface elements of various types, or any combination thereof. For instance, the selection(s) may include one or more selections of one or more links, one or more user interface buttons, one or more user interface menu items, one or more drop down arrows, one or more user interface elements of other types, or any combination and/or sequence/order thereof.

Dynamic content and/or static content in the reconstruction(s) 302/304 may be managed in various ways. In some examples, any of one or more sections of the dynamic content output in the content by the computing device(s) 310/312 may be different from any of one or more corresponding sections of corresponding dynamic content output in the content depicted in the screenshot(s) 306/308 captured by the computing device(s) 310/312, based on operations of server(s) utilized to produce the content in the reconstruction(s) 302/304 outputting different (e.g., updated) reconstructed dynamic content as in the initially constructed dynamic content (e.g., dynamic content may change randomly and/or change over time, notwithstanding the automated selections used for the reconstructions(s) 302/304 being the same). In some examples, any of one or more sections of the static content output in the content by the computing device(s) 310/312 may be the same as any of one or more corresponding sections of corresponding static content output in the content depicted in the screenshot(s) 306/308 captured by the computing device(s) 310/312.

Dynamic and/or static content may be managed differently and/or similarity. In various cases, the dynamic content in the reconstruction(s) 302/304 may be relatively different from the dynamic content depicted in the screenshot(s) 306/308; and the static content in the reconstruction(s) 302/304 may be relatively different from the static content depicted in the screenshot(s) 306/308. However, the current disclosure is not limited as such. The dynamic content in the reconstruction(s) 302/304 may be relatively similar to, and/or the same as, the dynamic content depicted in the screenshot(s) 306/308, based on operations of server(s) utilized to produce the content in the reconstruction(s) 302/304 outputting the same reconstructed dynamic content as in the initially constructed dynamic content. In various cases, the static content in the reconstruction(s) 302/304 may be relatively different from the static content depicted in the screenshot(s) 306/308, based on operations of server(s) utilized to produce the content in the reconstruction(s) 302/304 outputting different reconstructed static content as in the initially constructed static content (e.g., static content may include up-to-date content based on updates/new input from operators of the server(s) generating initial content depicted in the screenshot(s) 306/308, and/or based on updates/various new operations of any types used to manage content of the server(s) generating initial content depicted in the screenshot(s) 306/308, the new input/operations being received after the screenshot(s) 306/308 are taken and before the reconstruction(s) 302/304 are produced).

Selections used to identify and/or generate the reconstruction(s) 302/304 can include various selections of various types. For example, the selections used to identify and/or generate the reconstruction(s) 302/304 can include one or more automated selections, generated by the system(s) 318 and/or the computing device(s) 310/312. The automated selection(s) can simulate and/or emulate the user selection(s) received by the computing device(s) 314/316.

Figure 4 depicts example reconstructions 400 of screenshots of mobile computing device application windows used to take screenshots according to example embodiments of the present disclosure. The reconstructions 400 can be managed using one or more systems (e.g., the system(s) 418, as discussed below in further detail), which can be integrated with, and/or be separate from, one or more other systems (e.g., the system(s) 318 as discussed above with reference to Figure 3, one or more other systems, or any combination thereof).

The reconstructions 400 can include a reconstruction 402, a reconstruction 404, one or more other reconstructions, or any combination thereof. The reconstruction(s) 402/404 can be associated with one or more screenshots 406 and/or 408, respectively, utilized to generate the reconstruction(s) 402/404. The reconstruction(s) 402/404 can be associated with one or more mobile computing devices 410 and/or 412 utilized to present, by one or more displays of the mobile computing device(s) 410/412, the reconstruction(s) 402/404, respectively.

The screenshot(s) 406/408 can be associated with one or more mobile computing devices 414 and/or 416 utilized to generate the screenshot(s) 406/408. The reconstruction(s) 402/404 of the screenshot(s) 306/308 can be generated by the mobile computing device(s) 410/412 and/or the system(s) 418. The reconstruction(s) 402/404 can be generated based on content presented by one or more screens of the display(s) of the mobile computing device(s) 414/416, respectively. Individual ones of the screenshot(s) 406/408 can include an image representing a website window, such as a window presented in a browser by a corresponding device of the mobile computing device(s) 414/416.

Any of the devices utilized to manage the reconstructions 400 can operate in similar ways as, or different ways from, any other devices utilized to manage other reconstructions (e.g., the reconstructions 300, as discussed above with reference to Figure 3). For example, the mobile device(s) 410/412 can operate in similar ways as, or different ways from, one or more other computing devices (e.g., the computing device(s) 310/312, as discussed above with reference to Figure 3) generating one or more other reconstructions (e.g., the reconstruction(s) 302/304, as discussed above with reference to Figure 3). In such an example or another example, the mobile device(s) 414/416 can operate in similar ways as, or different ways from, one or more other computing devices (e.g., the computing device(s) 314/316, as discussed above with reference to Figure 3). In such an example or another example, the screenshot(s) 406/408 can be utilized to generate the reconstruction(s) 402/404 in similar ways as, or different ways from, one or more other screenshots (e.g., the screenshot(s) 306/308, as discussed above with reference to Figure 3) utilized to generate the reconstruction(s) 302/304, respectively.

Any operations performed by any devices associated with the reconstructions 400 can be the same as, or different from, any operations performed by any devices associated with the reconstructions 300. For example, one or more operations associated with a reconstruction 400 can be performed in a same way as, or a different way from, one or more other operations associated with a reconstruction 300, except by using mobile computing devices (e.g., the mobile computing device(s) 410/412) instead of computing devices (e.g., the computing device(s) 310/312). Alternatively or additionally, one or more operations associated with a reconstruction 300 can be performed in the same way as, or a different way from, one or more operations associated with a reconstruction 400, except by using mobile devices (e.g., the mobile device(s) 310/312) instead of computing devices (e.g., the computing device(s) 410/412).

Various types of content may be included in the reconstruction(s) 402/404. For example, the reconstruction(s) 402/404 can include content of various types, such as static content, active content, non-active content, dynamic content, such as dynamic content 420, any other type of content, or any combination thereof. The content (e.g., the dynamic content 420) can be managed by the mobile device(s) 410/412 in similar ways as, or different ways from, the content (e.g., the dynamic content 320) being managed by the computing device(s) 310/312.

While the mobile device(s) 410/412 can be utilized to generate the reconstruction(s) 402/404 based on the screenshot(s) 406/408 as discussed above in the current disclosure, it is not limited as such. In some examples, any types of devices (e.g., the computing device(s) 310/312) can be utilized to generate (e.g., automatically, by the system(s) 418) one or more reconstructions based on one or more mobile device screenshots. For instance, the computing device(s) 310/312 can be utilized to generate one or more reconstructions based on the screenshot(s) 406/408. The computing device(s) 310/312 can be utilized, in similar ways as, or different ways from, the mobile device(s) 410/412, to generate the reconstruction(s) based on the screenshot(s) 406/408.

In those or other examples, the mobile device(s) 410/412 can be utilized to generate (e.g., automatically, by the system(s) 418) one or more reconstructions based on computing device screenshots. For instance, the mobile device(s) 410/412 can be utilized to generate the reconstruction(s) based on any types of screenshots (e.g., the screenshot(s) 306/308). The mobile device(s) 410/412 can be utilized, in similar ways as, or different ways from, the computing device(s) 310/312, to generate one or more reconstructions based on the screenshot(s) 306/308.

The mobile device(s) 410/412 can be utilized to generate (e.g., automatically, by the system(s) 418) the reconstructions screenshot replication data, which can include one or more navigation identifiers associated with a first operational state. The navigation identifier(s) can include a mobile computing device identification identifier, an application identifier (e.g., a mobile device application identifier), and/or an application menu hierarchy position. Alternatively or additionally, the navigation identifier(s) can include a scroll position associated with the first operational state, and/or one or more other identifiers of any type.

Figure 5 depicts an environment 500 with one or more service provider servers, one or more external servers, and one or more devices for exchanging one or more communications associated with one or more reconstructions of one or more screenshots, according to example embodiments of the present disclosure. The environment can include the service provider servers, which can include one or more service provider servers 502 (also simply referred to herein as "server(s)"). The server(s) 502 can be communicatively coupled to a data center 504. In some examples, the server(s) 502 can be integrated with, or separate from, the system(s) 318 and/or 418, as discussed above with reference to Figures 1 and 2.

The environment can include various other servers and/or devices of various types. For example, the environment can include the device(s), which can include one or more devices 508. Alternatively or additionally, the environment can include the external server(s), which can include one or more external servers 506.

The server(s) 502 can be utilized to perform one or more reconstructing operations 510. For example, the reconstructing operation(s) 510 can include any operations utilized to perform any type of screenshot reconstructing, such as any operations performed by an automation agent (e.g., the automation agent 100, as discussed above with respect to Figure 1).

Any number of the communication(s) can be exchanged between the server(s) 502 and the user device(s) 508. The communication(s) exchanged between the external server(s) 506 and the user device(s) 508 can include one or more computing device-related website/mobile computing device application window-oriented requests (or "website/application-oriented request(s)," or, simply, "request(s)") 512. The request(s) 512 can be transmitted by the user device(s) 508 and received by the external server(s) 506. The communication(s) exchanged between the external server(s) 506 and the user device(s) 508 can include one or more computing device-related website/mobile computing device application window-oriented responses (or "website/application-oriented response(s)," or, simply, "response(s)") 514. The response(s) 514 can be transmitted by the external server(s) 506 and received by the user device(s) 508.

The reconstructing operation(s) 510 can be performed based on various communications between the server(s) 502, the external server(s) 506, and/or the user device(s) 508. For example, the reconstructing operation(s) 510 can be performed based on the request(s) 512 and/or the response(s) 514. In such an example or another example, the reconstructing operation(s) 510 can be performed using one or more screenshots taken based on content presented by the user device(s) 508. The content can be presented based on computing device-related website data and/or mobile computing device application window data. The computing device-related website data and/or mobile computing device application window data can be presented based on the request(s) 512 and/or the response(s) 514. The reconstructing operation(s) 510 can be performed using the screenshot(s) taken based on the request(s) 512 and/or the response(s) 514.

The communication(s) exchanged between the server(s) 502 and the user device(s) 508 can include one or more screenshot-oriented communications 516. The screenshot-oriented communication(s) 516 can be transmitted by the user device(s) 508 and received by the server(s) 502. The communication(s) exchanged between the server(s) 502 and the user device(s) 508 can include one or more reconstruction-oriented communications 518. The reconstruction-oriented communication(s) 518 can be transmitted by the user device(s) 508 and received by the server(s) 502.

The screenshot-oriented communication(s) 516 can be used to initiate the reconstructing operation(s) 510. Individual ones of the screenshot-oriented communication(s) 516 can include any of the screenshot(s). The screenshot-oriented communication(s) 516 can be transmitted by the user device(s) 508 and to the server(s) 502. The reconstructing operation(s) 510 can be performed by the server(s) 502 based on the screenshot-oriented communication(s) 516.

The reconstruction-oriented communication(s) 518 can be exchanged based on one or more results of the reconstructing operation(s) 510, and/or the screenshot-oriented communication(s) 516. Individual ones of the reconstruction-oriented communication(s) 518 can include a reconstruction based on a corresponding screenshot received in a corresponding screenshot-oriented communication 516.

While the screenshot-oriented communication(s) 516 and/or the reconstruction-oriented communication(s) 518 can be exchanged between the server(s) 502 and the user device(s) 508 as discussed above in the current disclosure, it is not limited as such. In some examples, one or more response communications can be transmitted by the server(s) 502 and to the user device(s) 508, alternatively or additionally to the reconstruction-oriented communication(s) 518. For instance, a response communication from among the response communication(s) can include information, such as one or more identifiers, associated with, and/or indicating/representing, that a failure (e.g., a partial failure and/or an entire failure) to replicate a screenshot occurred (e.g., due to a failure of the server(s) 502 and/or the external server(s) 506. Additionally or alternatively, the response communication can include information, such as one or more identifiers, associated with, and/or indicating/representing, that missing information is identified (e.g., and, in some cases, required) to replicate a screenshot. Additionally or alternatively, the response communication can include information, such as one or more identifiers, associated with, and/or indicating/representing, that user confirmation and/or input regarding the failure and/or missing is required to replicate a screenshot.

Various notifications associated with failures/missing information can be transmitted by the server(s) 502 and to the user device(s) 508. One or more notifications can indicate a notification of a login error or a communication channel subscription error prior to completion of the replication of the operational state.

Various other types of communications can be transmitted by the user device(s) 508 and to the server(s) 502. In some examples, one or more other communications (e.g., one or more resubmissions, and/or one or more subsequent screenshot-oriented communications) can be transmitted by the user device(s) 508 and to the server(s) 502, alternatively or additionally to the screenshot-oriented communication(s) 516. For instance, another communication from among the other communication(s) can include information, such as one or more selections and/or one or more confirmation, associated with, and/or indicating/representing, a request for the replication to be performed notwithstanding the failure to replicate the screenshot and/or the missing information being identified. Additionally or alternatively, the other communication can include such as one or more selections and/or one or more confirmation, associated with, and/or indicating/representing, a request for the replication to be performed notwithstanding the missing information being identified. The selection(s) may include information satisfying the requirement for the missing information. Additionally or alternatively, the response communication can include one or more selections and/or one or more confirmations, associated with, and/or indicating/representing, a confirmation and/or input satisfying the requirement for confirmation and/or input.

Various communications to satisfy, and/or in correction of, the failures/missing information can be transmitted by the user device(s) 508 and to the server(s) 502. One or more communications can include information associated with one or more selections received as user input by the user device(s) 508. The information can indicate the selection(s) being made to perform a login and/or to subscribe to a channel. The information can include one or more confirmations identified by the user device(s) 508 as a result of the login and/or subscription being performed. The information (e.g., the user login/subscription information, and/or the confirmation thereof, can be utilized by the server(s) 502 to confirm the completion of the login/subscription, and/or to complete the replication of the operational state.

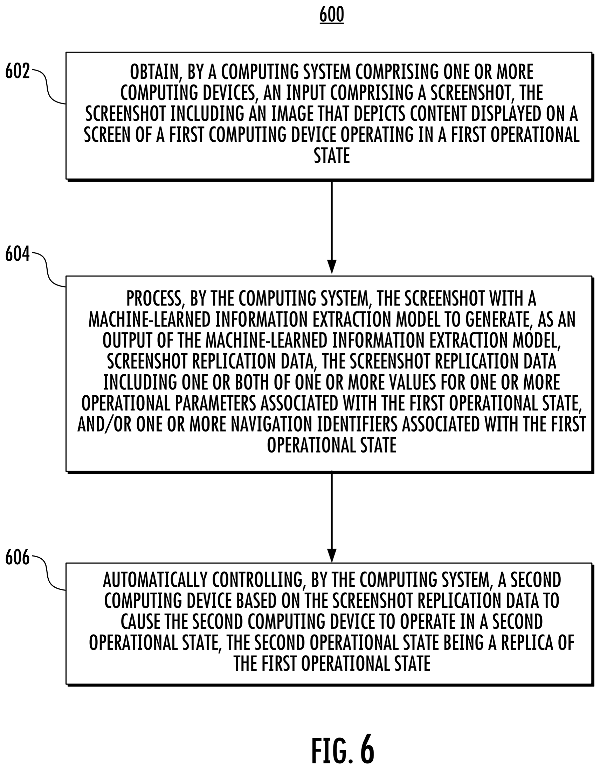

Figure 6 is a flow chart diagram illustrating an example method 600 for reconstructing a source of a screenshot according to example implementations of aspects of the present disclosure.

At 602, the method 600 can include obtaining, by a computing system including one or more computing devices, an input including a screenshot, the screenshot including an image that depicts content displayed on a screen of a first computing device operating in a first operational state. The computing system, and/or the computing devices in the computing system, can include the automation agent 100, the server(s) 502, the data center 504, and/or one or more other computing devices. The screenshot can include any of the screenshot(s) 122, 202, 204, 306, 308, 406, and/or 408. The first computing device can include any of the device(s) 314, 316, 414, 416, and/or 508.

At 604, the method 600 can include processing, by the computing system, the screenshot with a machine-learned information extraction model to generate, as an output of the machine-learned information extraction model, screenshot replication data, the screenshot replication data including one or both of one or more values for one or more operational parameters associated with the first operational state, and/or one or more navigation identifiers associated with the first operational state. The machine-learned information extraction model can include the extraction model 102. In some examples, the machine-learned information extraction model can include the reconstruction model 104.

The extraction model 102 and/or the reconstruction model 104 can generate the screenshot replication data. For example, the extraction model 102 can generate any portion of the screenshot replication data, which can include, and/or be output in, information extraction output 124. Alternatively or additionally, the reconstruction model 104 can generate any portion of the screenshot replication data, which can include, and/or be output in, reconstruction output 126.

At 606, the method 600 can include automatically controlling, by the computing system, a second computing device based on the screenshot replication data to cause the second computing device to operate in a second operational state, the second operational state being a replica of the first operational state. The second computing device can include any of the device(s) 310, 312, 410, 412, and/or 508. The second computing device operating in the second operational state can output any of the reconstruction(s) 302, 304, 402, 404.

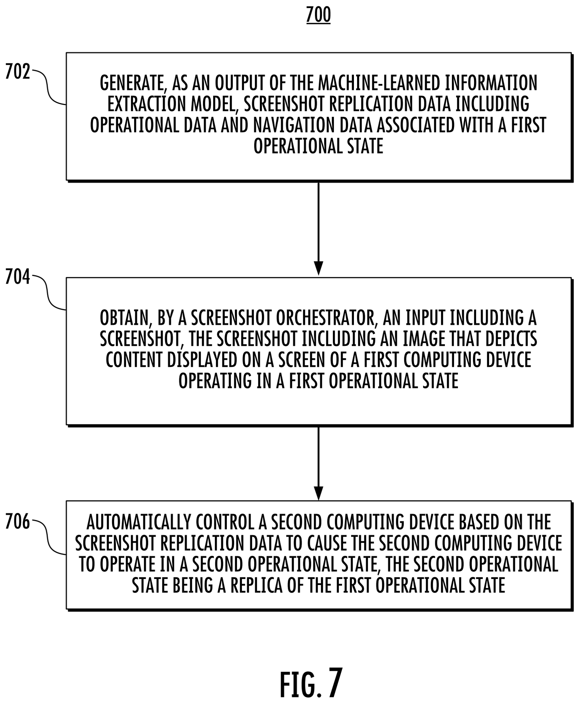

Figure 7 is a flow chart diagram illustrating an example method 700 for reconstructing a source of a screenshot according to example implementations of aspects of the present disclosure.

At 702, the method 700 can include generating, as an output of the machine-learned information extraction model, screenshot replication data including operational data and navigation data associated with a first operational state. The screenshot replication data can include replication data that includes, and/or is included in, the extraction output 124 and/or the reconstruction output 126.

The operational data can include one or more values for one or more operational parameters associated with the first operational state. The one or more values for the one or more operational parameters can include one or more of a current application being executed by the first computing device and data describing one or more user interface elements contained within content output by the first computing device. The navigation data can include one or more navigation identifiers associated with the first operational state. The one or more navigation identifiers can include one or more of: a Uniform Resource Locator, an application menu hierarchy position, and a scroll position associated with the first operational state.

At 704 the method 700 can include obtaining, by a screenshot orchestrator, an input including a screenshot, the screenshot including an image that depicts content displayed on a screen of a first computing device operating in a first operational state. The image that depicts content displayed on a screen of a first computing device operating in a first operational state can include an image of the first computing device, which can include any of the device(s) 314, 316, 414, 416, and/or 508.

At 706 the method 700 can include automatically controlling a second computing device based on the screenshot replication data to cause the second computing device to operate in a second operational state, the second operational state being a replica of the first operational state. The second computing device operating in the second operational state can output any of the reconstruction(s) 302, 304, 402, 404. The second computing device can be controlled to operate in a second operational state based on screen discrimination output 128, or regardless of any screen discrimination output. For example, according to one or more settings of a computing system, the second computing device can be controlled to operate in the second operational state, by using (e.g., and, in some cases, by requiring) the screen discrimination output 128, or by disregarding any screen discrimination output. The computing system and/or computing devices in the computing system, can include the automation agent 100, the server(s) 502, the data center 504, and/or one or more other computing devices he screen discrimination output.

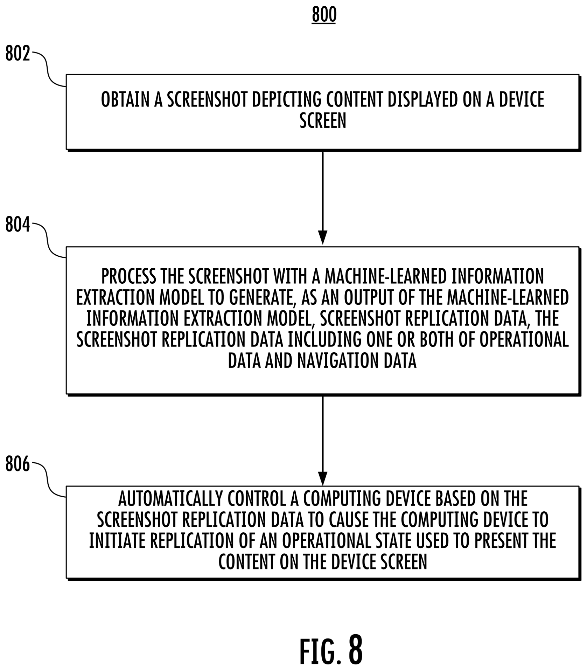

Figure 8 is a flow chart diagram illustrating an example method 800 for reconstructing a source of a screenshot according to example implementations of aspects of the present disclosure.

At 802, the method 800 can include obtaining a screenshot depicting content displayed on a device screen. The screenshot can include any of the screenshot(s) 122, 202, 204, 306, 308, 406, and/or 408. The device screen can include any screen in a computing device (e.g., a first computing device), which can include any of the device(s) 314, 316, 414, 416, and/or 508.

At 806, the method 800 can include processing the screenshot with a machine-learned information extraction model to generate, as an output of the machine-learned information extraction model, screenshot replication data, the screenshot replication data including one or both of operational data and navigation data. The machine-learned information extraction model can include the extraction model 102. In some examples, the machine-learned information extraction model can include the reconstruction model 104.

At 808, the method 800 can include automatically controlling a computing device based on the screenshot replication data to cause the computing device to initiate replication of an operational state used to present the content on the device screen. The computing device (e.g., a second computing device) can include any of the device(s) 310, 312, 410, 412, and/or 508.

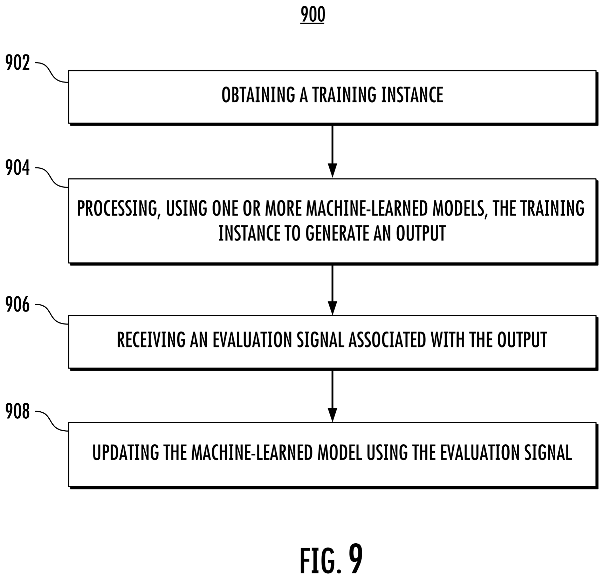

Figure 9 depicts a flowchart of a method 900 for training one or more machine-learned models according to aspects of the present disclosure. For instance, an example machine-learned model can include individual ones of an information extraction model 102, a reconstruction model 104, a screen discrimination model 106, and/or a large language model 108.

One or more portion(s) of example method 900 can be implemented by a computing system that includes one or more computing devices such as, for example, computing systems described with reference to the other figures. Each respective portion of example method 900 can be performed by any (or any combination) of one or more computing devices. Moreover, one or more portion(s) of example method 900 can be implemented on the hardware components of the device(s) described herein, for example, to train one or more systems or models. Figure 9 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. Figure 9 is described with reference to elements/terms described with respect to other systems and figures for exemplary illustrated purposes and is not meant to be limiting. One or more portions of example method 900 can be performed additionally, or alternatively, by other systems.

At 902, example method 900 can include obtaining a training instance. A set of training data can include a plurality of training instances divided between multiple datasets (e.g., a training dataset, a validation dataset, or testing dataset). A training instance can be labeled or unlabeled. Although referred to in example method 900 as a "training" instance, it is to be understood that runtime inferences can form training instances when a model is trained using an evaluation of the model's performance on that runtime instance (e.g., online training/learning). Example data types for the training instance and various tasks associated therewith are described throughout the present disclosure.

At 904, example method 900 can include processing, using one or more machine-learned models, the training instance to generate an output. The output can be directly obtained from the one or more machine-learned models or can be a downstream result of a chain of processing operations that includes an output of the one or more machine-learned models.

At 906, example method 900 can include receiving an evaluation signal associated with the output. The evaluation signal can be obtained using a loss function. Various determinations of loss can be used, such as mean squared error, likelihood loss, cross entropy loss, hinge loss, contrastive loss, or various other loss functions. The evaluation signal can be computed using known ground-truth labels (e.g., supervised learning), predicted or estimated labels (e.g., semi- or self-supervised learning), or without labels (e.g., unsupervised learning). The evaluation signal can be a reward (e.g., for reinforcement learning). The reward can be computed using a machine-learned reward model configured to generate rewards based on output(s) received. The reward can be computed using feedback data describing human feedback on the output(s).

At 908, example method 900 can include updating the machine-learned model using the evaluation signal. For example, values for parameters of the machine-learned model(s) can be learned, in some embodiments, using various training or learning techniques, such as, for example, backwards propagation. For example, the evaluation signal can be backpropagated from the output (or another source of the evaluation signal) through the machine-learned model(s) to update one or more parameters of the model(s) (e.g., based on a gradient of the evaluation signal with respect to the parameter value(s)). For example, system(s) containing one or more machine-learned models can be trained in an end-to-end manner. Gradient descent techniques can be used to iteratively update the parameters over a number of training iterations. In some implementations, performing backwards propagation of errors can include performing truncated backpropagation through time. Example method 900 can include implementing a number of generalization techniques (e.g., weight decays, dropouts, etc.) to improve the generalization capability of the models being trained.

In some implementations, example method 900 can be implemented for training a machine-learned model from an initialized state to a fully trained state (e.g., when the model exhibits a desired performance profile, such as based on accuracy, precision, recall, etc.).

In some implementations, example method 900 can be implemented for particular stages of a training procedure. For instance, in some implementations, example method 900 can be implemented for pre-training a machine-learned model. Pre-training can include, for instance, large-scale training over potentially noisy data to achieve a broad base of performance levels across a variety of tasks/data types.

In some implementations, example method 900 can be implemented for fine-tuning a machine-learned model. Fine-tuning can include, for instance, smaller-scale training on higher-quality (e.g., labeled, curated, etc.) data. Fine-tuning can affect all or a portion of the parameters of a machine-learned model. For example, various portions of the machine-learned model can be "frozen" for certain training stages. For example, parameters associated with an embedding space can be "frozen" during fine-tuning (e.g., to retain information learned from a broader domain(s) than present in the fine-tuning dataset(s)). In some implementations, example method 900 uses adapter modules. Adapters can be small trainable layers that are inserted between pre-existing layers of a pre-trained model. During the fine-tuning process, the original parameters of the pre-trained model are typically frozen, and only the parameters of the adapters are updated.

In some implementations, example method 900 can be implemented to execute parameter-efficient fine-tuning methods, such as Layerwise Optimization of Residuals (LoRA). LoRA can refine pre-trained models with minimal adjustments to the original parameters. This can be achieved by introducing trainable low-rank matrices that modify the behavior of the pre-trained weights without directly altering them. In some implementations, during fine-tuning, only these auxiliary matrices are updated, which significantly reduces the number of parameters that are trained.

An example fine-tuning approach includes reinforcement learning. Reinforcement learning can be based on user feedback on model performance during use.

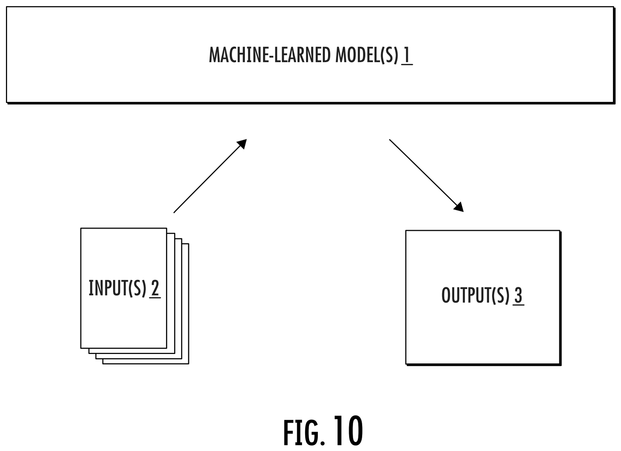

Figure 10 is a block diagram of an example processing flow for using machine-learned model(s) 1 to process input(s) 2 to generate output(s) 3.

Machine-learned model(s) 1 can be or include one or multiple machine-learned models or model components. Example machine-learned models can include neural networks (e.g., deep neural networks). Example machine-learned models can include nonlinear models or linear models. Example machine-learned models can use other architectures in lieu of or in addition to neural networks. Example machine-learned models can include decision tree based models, support vector machines, hidden Markov models, Bayesian networks, linear regression models, k-means clustering models, etc.

Machine-learned model(s) 1 can be or include, or otherwise be representative of any one or more of the machine-learned models described above with respect to the preceding figures. For example, machine-learned model(s) 1 can be or include, or otherwise be representative of any one or more of the information extraction model 102, the reconstruction model 104, the screen discrimination model 106, and/or the large language model 108, etc. Although various features, variations, and implementations described below are described with respect to machine-learned model(s) 1, it is to be understood that such features, variations, and implementations are to be understood as described with respect to each of the information extraction model 102, the reconstruction model 104, the screen discrimination model 106, the large language model 108, and/or any other machine-learned component described herein.

Example neural networks can include feed-forward neural networks, recurrent neural networks (RNNs), including long short-term memory (LSTM) based recurrent neural networks, convolutional neural networks (CNNs), diffusion models, generative-adversarial networks, or other forms of neural networks. Example neural networks can be deep neural networks. Some example machine-learned models can leverage an attention mechanism such as self-attention. For example, some example machine-learned models can include multi-headed self-attention models.

Machine-learned model(s) 1 can include a single or multiple instances of the same model configured to operate on data from input(s) 2. Machine-learned model(s) 1 can include multiple different models or multiple different model portions configured to operate on data from input(s) 2.

Machine-learned model(s) 1 can include an ensemble of different models that can cooperatively interact to process data from input(s) 2. For example, a model ensemble can include multiple models that have different attributes (e.g., different architectures, trained with different recipes, etc.). The ensemble can output an overall output based on the individual outputs of the constituent models. In this manner, for instance, the diverse constituent models can work together to provide system-level robustness by effectively aggregating over individual strengths and weaknesses of any given model. The respective individual outputs can be combined in a weighted combination, using a voting or routing mechanism, or a learned output layer (e.g., one or more feedforward or fully-connected layers).

Machine-learned model(s) 1 can employ a mixture-of-experts structure. See, e.g., Zhou et al., Mixture-of-Experts with Expert Choice Routing, arXiv:1242.09368v2 (Oct. 14, 1022). For example, different portions of a model can learn (explicitly or implicitly) different expertise areas, with pathways through the model being selected by a learned routing mechanism that engages the appropriate expert for a given input (e.g., a given portion of an input, such as on a per-token basis). For example, a feedforward network can be sparsely activated for a given portion of an input based on an output of a routing mechanism that processes the portion of the input. In this manner, for instance, the group of activated weights can form an "expert" that is selected by the router. On each forward pass, only a subset of the total model weights may be engaged, thereby decreasing a quantity of operations performed for processing a given input compared to a densely activated model. In this manner, for instance, the expressive and interpretive power of a high-parameter-count model can be achieved with more compute-efficient forward passes.

Input(s) 2 can generally include or otherwise represent various types of data. Input(s) 2 can include one type or many different types of data. Output(s) 3 can be data of the same type(s) or of different types of data as compared to input(s) 2. Output(s) 3 can include one type or many different types of data.

Example data types for input(s) 2 or output(s) 3 include natural language text data, software code data (e.g., source code, object code, machine code, or any other form of computer-readable instructions or programming languages), machine code data (e.g., binary code, assembly code, or other forms of machine-readable instructions that can be executed directly by a computer's central processing unit), assembly code data (e.g., low-level programming languages that use symbolic representations of machine code instructions to program a processing unit), genetic data or other chemical or biochemical data, image data, audio data, audiovisual data, haptic data, biometric data, medical data, financial data, statistical data, geographical data, astronomical data, historical data, sensor data generally (e.g., digital or analog values, such as voltage or other absolute or relative level measurement values from a real or artificial input, such as from an audio sensor, light sensor, displacement sensor, etc.), and the like. Data can be raw or processed and can be in any format or schema.

In multimodal inputs 2 or outputs 3, example combinations of data types include image data and audio data, image data and natural language data, natural language data and software code data, image data and biometric data, sensor data and medical data, etc. It is to be understood that any combination of data types in an input 2 or an output 3 can be present.

An example input 2 can include one or multiple data types, such as the example data types noted above. An example output 3 can include one or multiple data types, such as the example data types noted above. The data type(s) of input 2 can be the same as or different from the data type(s) of output 3. It is to be understood that the example data types noted above are provided for illustrative purposes only. Data types contemplated within the scope of the present disclosure are not limited to those examples noted above.

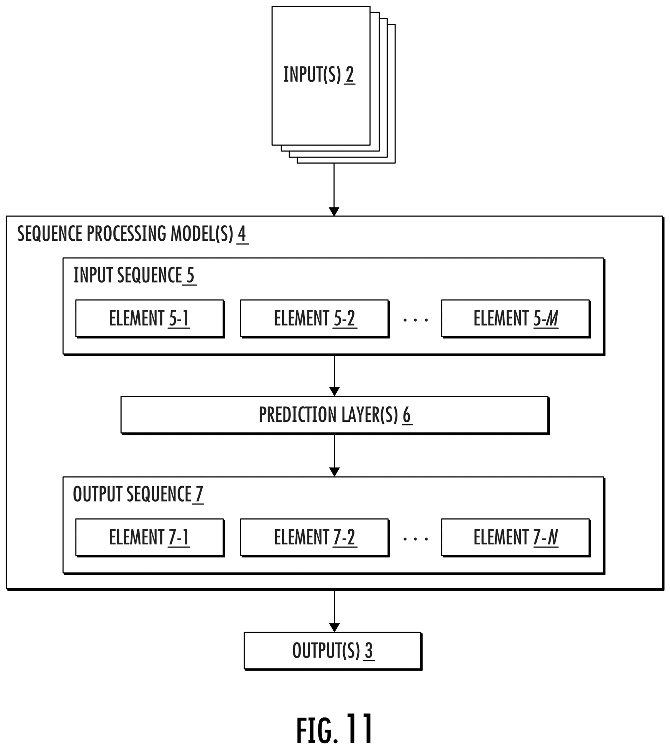

Figure 11 is a block diagram of an example implementation of an example machine-learned model configured to process sequences of information. For instance, an example implementation of machine-learned model(s) 1 can include machine-learned sequence processing model(s) 4. An example system can pass input(s) 2 to sequence processing model(s) 4. Sequence processing model(s) 4 can include one or more machine-learned components. Sequence processing model(s) 4 can process the data from input(s) 2 to obtain an input sequence 5. Input sequence 5 can include one or more input elements 5-1, 5-2,...,5-M, etc. obtained from input(s) 2. Sequence processing model 4 can process input sequence 5 using prediction layer(s) 6 to generate an output sequence 7. Output sequence 7 can include one or more output elements 7-1, 7-2, ... , 7-N, etc. generated based on input sequence 5. The system can generate output(s) 3 based on output sequence 7.

Sequence processing model(s) 4 can include one or multiple machine-learned model components configured to ingest, generate, or otherwise reason over sequences of information. For example, some example sequence processing models are referred to as language models and can leverage language-based understandings across one or multiple modalities of input information. Sequence processing model(s) 4 can include relatively large models (e.g., more parameters, computationally expensive, etc.), which may be referred to as "Large Language Models" or LLMs. Sequence processing model(s) 4 can include relatively small models (e.g., fewer parameters, computationally lightweight, etc.), which may be referred to as "Small Language Models" or SLMs. Example language models include, for instance, models described in Gemma: Open Models Based on Gemini Research and Technology, Google, https://arxiv.org/abs/2403.08295; Gemma 2: Improving Open Language Models at a Practical Size, Google, https://arxiv.org/abs/2408.00118.

Sequence processing model(s) 4 can process one or multiple types of data simultaneously. Variations of language models that can perform joint vision and language tasks may be referred to as "Vision-Language Models," or VLMs. Example VLMs include models described in PaliGemma: A versatile 3B VLM for transfer, Google, https://arxiv.org/abs/2407.07726; PaliGemma 2: A Family of Versatile VLMs for Transfer, Google, https://arxiv.org/abs/2412.03555; Flamingo: a Visual Language Model for Few-Shot Learning, Google, https://arxiv.org/abs/1244.14198; PaLI: A Jointly-Scaled Multilingual Language-Image Model, Google, https://arxiv.org/abs/1249.06794.

Sequence processing model(s) 4 can be multimodal. Example multimodal sequence processing models include, for instance, models described in Gemini: A Family of Highly Capable Multimodal Models, Google, https://arxiv.org/abs/2216.11805; Gemini 1.5: Unlocking multimodal understanding across millions of tokens of context, Google, https://arxiv.org/abs/2403.05530.

Other example sequence processing models can operate to generate outputs or receive inputs in specific domains, such as image domains, see, e.g., Dosovitskiy et al., An Image is Worth 16x16 Words: Transformers for Image Recognition at Scale, arXiv:2010.11929v2 (Jun. 3, 1021), audio domains, see, e.g., Agostinelli et al., MusicLM: Generating Music From Text, arXiv:2301.11325v1 (Jan. 26, 1023), biochemical domains, see, e.g., Jumper et al., Highly accurate protein structure prediction with AlphaFold, 596 Nature 583 (Aug. 26, 1021), by way of example.

In general, sequence processing model(s) 4 can obtain input sequence 5 using data from input(s) 2. For instance, input sequence 5 can include a representation of data from input(s) 2 in a format understood by sequence processing model(s) 4. One or more machine-learned components of sequence processing model(s) 4 can ingest the data from input(s) 2, parse the data into pieces compatible with the processing architectures of sequence processing model(s) 4 (e.g., via "tokenization"), and project the pieces into an input space associated with prediction layer(s) 6 (e.g., via "embedding").

Sequence processing model(s) 4 can ingest the data from input(s) 2 and parse the data into a sequence of elements to obtain input sequence 5. For example, a portion of input data from input(s) 2 can be broken down into pieces that collectively represent the content of the portion of the input data. The pieces can provide the elements of the sequence.

Elements 5-1, 5-2, . . . , 5-M can represent, in some cases, building blocks for capturing or expressing meaningful information in a particular data domain. For instance, the elements can describe "atomic units" across one or more domains. For example, for textual input source(s), the elements can correspond to groups of one or more words or sub-word components, such as sets of one or more characters.

For example, elements 5-1, 5-2, . . . , 5-M can represent tokens obtained using a tokenizer. For instance, a tokenizer can process a given portion of an input source and output a series of tokens (e.g., corresponding to input elements 5-1, 5-2, ... , 5-M) that represent the portion of the input source. Various approaches to tokenization can be used. For instance, textual input source(s) can be tokenized using a byte-pair encoding (BPE) technique. See, e.g., Kudo et al., SentencePiece: A simple and language independent subword tokenizer and detokenizer for Neural Text Processing, Proceedings of the 2018 Conference on Empirical Methods in Natural Language Processing (System Demonstrations), pages 66-71 (October 31-November 4, 2018), https://aclanthology.org/D18-2012.pdf. Image-based input source(s) can be tokenized by extracting and serializing patches from an image.

In general, arbitrary data types can be serialized and processed into input sequence 5. It is to be understood that element(s) 5-1, 5-2, ... , 5-M depicted in Figure 11 can be the tokens or can be the embedded representations thereof.

Prediction layer(s) 6 can predict one or more output elements 7-1, 7-2, . . . , 7-N based on the input elements. Prediction layer(s) 6 can include one or more machine-learned model architectures, such as one or more layers of learned parameters that manipulate and transform the input(s) to extract higher-order meaning from, and relationships between, input element(s) 5-1, 5-2, ... , 5-M. In this manner, for instance, example prediction layer(s) 6 can predict new output element(s) in view of the context provided by input sequence 5.

Prediction layer(s) 6 can evaluate associations between portions of input sequence 5 and a particular output element. These associations can inform a prediction of the likelihood that a particular output follows the input context. For example, consider the textual snippet, "The carpenter's toolbox was small and heavy. It was full of _." Example prediction layer(s) 6 can identify that "It" refers back to "toolbox" by determining a relationship between the respective embeddings. Example prediction layer(s) 6 can also link "It" to the attributes of the toolbox, such as "small" and "heavy." Based on these associations, prediction layer(s) 6 can, for instance, assign a higher probability to the word "nails" than to the word "sawdust."

A transformer is an example architecture that can be used in prediction layer(s) 4. See, e.g., Vaswani et al., Attention Is All You Need, arXiv:1706.03762v7 (Aug. 2, 1023). A transformer is an example of a machine-learned model architecture that uses an attention mechanism to compute associations between items within a context window. The context window can include a sequence that contains input sequence 5 and potentially one or more output element(s) 7-1, 7-2, . . . , 7-N. A transformer block can include one or more attention layer(s) and one or more post-attention layer(s) (e.g., feedforward layer(s), such as a multi-layer perceptron).

Prediction layer(s) 6 can include other machine-learned model architectures in addition to or in lieu of transformer-based architectures. For example, recurrent neural networks (RNNs) and long short-term memory (LSTM) models can also be used, as well as convolutional neural networks (CNNs). In general, prediction layer(s) 6 can leverage various kinds of artificial neural networks that can understand or generate sequences of information.

Output sequence 7 can include or otherwise represent the same or different data types as input sequence 5. For instance, input sequence 5 can represent textual data, and output sequence 7 can represent textual data. Input sequence 5 can represent image, audio, or audiovisual data, and output sequence 7 can represent textual data (e.g., describing the image, audio, or audiovisual data). It is to be understood that prediction layer(s) 6, and any other interstitial model components of sequence processing model(s) 4, can be configured to receive a variety of data types in input sequence(s) 5 and output a variety of data types in output sequence(s) 7.

Output sequence 7 can have various relationships to input sequence 5. Output sequence 7 can be a continuation of input sequence 5. Output sequence 7 can be complementary to input sequence 5. Output sequence 7 can translate, transform, augment, or otherwise modify input sequence 5. Output sequence 7 can answer, evaluate, confirm, or otherwise respond to input sequence 5. Output sequence 7 can implement (or describe instructions for implementing) an instruction provided via input sequence 5.

Output sequence 7 can be generated autoregressively. For instance, for some applications, an output of one or more prediction layer(s) 6 can be passed through one or more output layers (e.g., softmax layer) to obtain a probability distribution over an output vocabulary (e.g., a textual or symbolic vocabulary) conditioned on a set of input elements in a context window. In this manner, for instance, output sequence 7 can be autoregressively generated by sampling a likely next output element, adding that element to the context window, and re-generating the probability distribution based on the updated context window, and sampling a likely next output element, and so forth.

Output sequence 7 can also be generated non-autoregressively. For instance, multiple output elements of output sequence 7 can be predicted together without explicit sequential conditioning on each other. See, e.g., Saharia et al., Non-Autoregressive Machine Translation with Latent Alignments, arXiv:1004.07437v3 (Nov. 16, 1020).

Output sequence 7 can include one or multiple portions or elements. In an example content generation configuration, output sequence 7 can include multiple elements corresponding to multiple portions of a generated output sequence (e.g., a textual sentence, values of a discretized waveform, computer code, etc.). In an example classification configuration, output sequence 7 can include a single element associated with a classification output. For instance, an output "vocabulary" can include a set of classes into which an input sequence is to be classified. For instance, a vision transformer block can pass latent state information to a multilayer perceptron that outputs a likely class value associated with an input image.

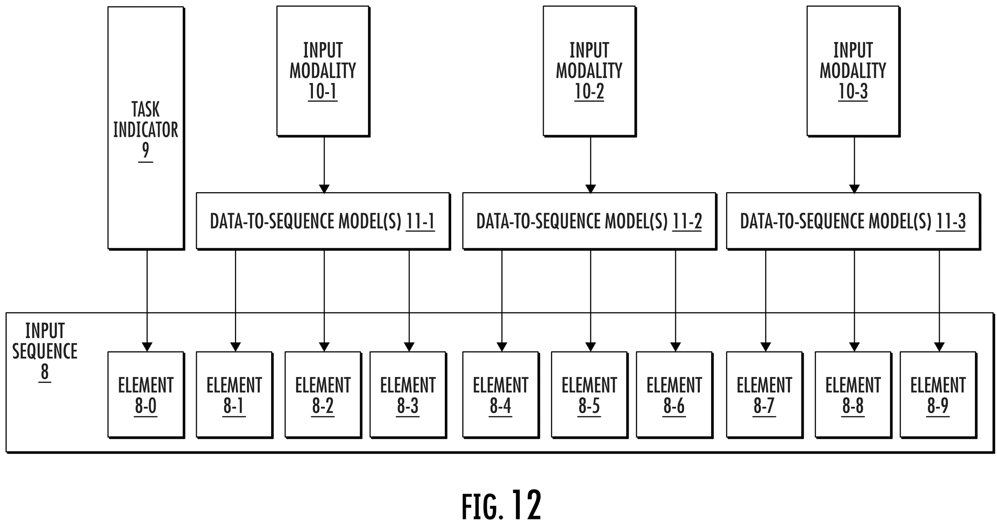

Figure 12 is a block diagram of an example technique for populating an example input sequence 8. Input sequence 8 can include various functional elements that form part of the model infrastructure, such as an element 8-0 obtained from a task indicator 9 that signals to any model(s) that process input sequence 8 that a particular task is being performed (e.g., to help adapt a performance of the model(s) to that particular task). Input sequence 8 can include various data elements from different data modalities. For instance, an input modality 10-1 can include one modality of data. A data-to-sequence model 11-1 can process data from input modality 10-1 to project the data into a format compatible with input sequence 8 (e.g., one or more vectors dimensioned according to the dimensions of input sequence 8) to obtain elements 8-1, 8-2, 8-3. Another input modality 10-2 can include a different modality of data. A data-to-sequence model 11-2 can project data from input modality 10-2 into a format compatible with input sequence 8 to obtain elements 8-4, 8-5, 8-6. Another input modality 10-3 can include yet another different modality of data. A data-to-sequence model 11-3 can project data from input modality 10-3 into a format compatible with input sequence 8 to obtain elements 8-7, 8-8, 8-9.

Input sequence 8 can be the same as or different from input sequence 5. Input sequence 8 can be a multimodal input sequence that contains elements that represent data from different modalities using a common dimensional representation. For instance, an embedding space can have P dimensions. Input sequence 8 can be configured to contain a plurality of elements that have P dimensions. In this manner, for instance, example implementations can facilitate information extraction and reasoning across diverse data modalities by projecting data into elements in the same embedding space for comparison, combination, or other computations therebetween.

For example, elements 8-0, ... , 8-9 can indicate particular locations within a multidimensional embedding space. Some elements can map to a set of discrete locations in the embedding space. For instance, elements that correspond to discrete members of a predetermined vocabulary of tokens can map to discrete locations in the embedding space that are associated with those tokens. Other elements can be continuously distributed across the embedding space. For instance, some data types can be broken down into continuously defined portions (e.g., image patches) that can be described using continuously distributed locations within the embedding space.

In some implementations, the expressive power of the embedding space may not be limited to meanings associated with any particular set of tokens or other building blocks. For example, a continuous embedding space can encode a spectrum of high-order information. An individual piece of information (e.g., a token) can map to a particular point in that space: for instance, a token for the word "dog" can be projected to an embedded value that points to a particular location in the embedding space associated with canine-related information. Similarly, an image patch of an image of a dog on grass can also be projected into the embedding space. In some implementations, the projection of the image of the dog can be similar to the projection of the word "dog" while also having similarity to a projection of the word "grass," while potentially being different from both. In some implementations, the projection of the image patch may not exactly align with any single projection of a single word. In some implementations, the projection of the image patch can align with a combination of the projections of the words "dog" and "grass." In this manner, for instance, a high-order embedding space can encode information that can be independent of data modalities in which the information is expressed.

Task indicator 9 can include a model or model component configured to identify a task being performed and inject, into input sequence 8, an input value represented by element 8-0 that signals which task is being performed. For instance, the input value can be provided as a data type associated with an input modality and projected along with that input modality (e.g., the input value can be a textual task label that is embedded along with other textual data in the input; the input value can be a pixel-based representation of a task that is embedded along with other image data in the input; etc.). The input value can be provided as a data type that differs from or is at least independent from other input(s). For instance, the input value represented by element 8-0 can be learned within a continuous embedding space.

Input modalities 10-1, 10-2, and 10-3 can be associated with various different data types (e.g., as described above with respect to input(s) 2 and output(s) 3).

Data-to-sequence models 11-1, 11-2, and 11-3 can be the same or different from each other. Data-to-sequence models 11-1, 11-2, and 11-3 can be adapted to each respective input modality 10-1, 10-2, and 10-3. For example, a textual data-to-sequence model can subdivide a portion of input text and project the subdivisions into element(s) in input sequence 8 (e.g., elements 8-1, 8-2, 8-3, etc.). An image data-to-sequence model can subdivide an input image and project the subdivisions into element(s) in input sequence 8 (e.g., elements 8-4, 8-5, 8-6, etc.). An arbitrary data type data-to-sequence model can subdivide an input of that arbitrary data type and project the subdivisions into element(s) in input sequence 8 (e.g., elements 8-7, 8-8, 8-9, etc.).

Data-to-sequence models 11-1, 11-2, and 11-3 can form part of machine-learned sequence processing model(s) 4. Data-to-sequence models 11-1, 11-2, and 11-3 can be jointly trained with or trained independently from machine-learned sequence processing model(s) 4. Data-to-sequence models 11-1, 11-2, and 11-3 can be trained end-to-end with machine-learned sequence processing model(s) 4.

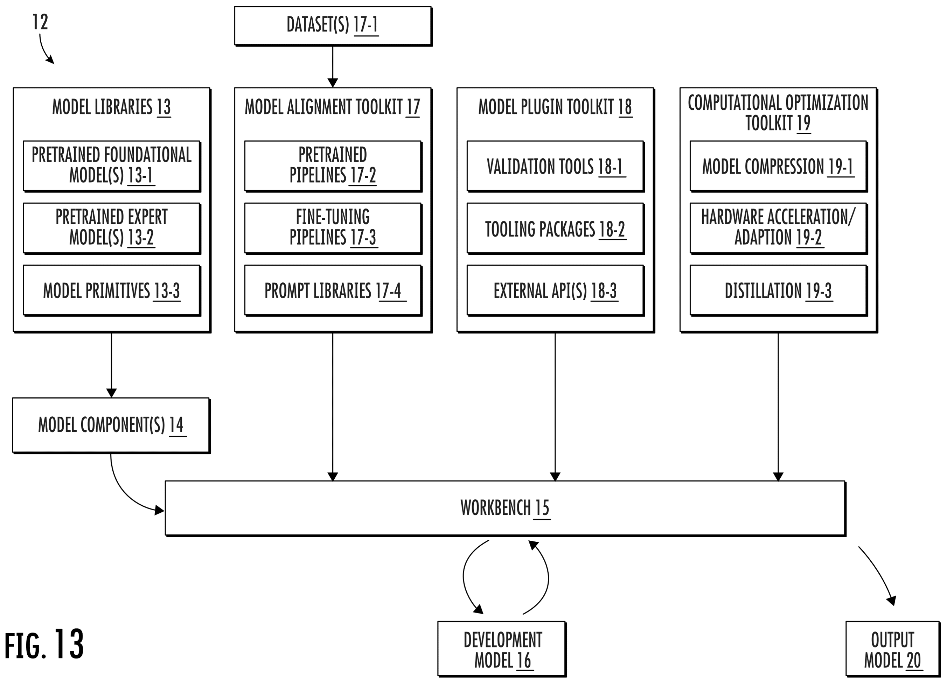

Figure 13 is a block diagram of an example model development platform 12 that can facilitate creation, adaptation, and refinement of example machine-learned models (e.g., machine-learned model(s) 1, sequence processing model(s) 4, etc.). Model development platform 12 can provide a number of different toolkits that developer systems can employ in the development of new or adapted machine-learned models.

Model development platform 12 can provide one or more model libraries 13 containing building blocks for new models. Model libraries 13 can include one or more pre-trained foundational models 13-1, which can provide a backbone of processing power across various tasks. Model libraries 13 can include one or more pre-trained expert models 13-2, which can be focused on performance in particular domains of expertise. Model libraries 13 can include various model primitives 13-3, which can provide low-level architectures or components (optionally pre-trained), which can be assembled in various arrangements as desired. Model primitives 13-3 can include a library of pre-trained adapters or LoRA modules that can adapt a baseline foundational model to align its outputs with a desired performance profile, augment model capabilities (e.g., to adapt to a different input modality, etc.), and the like.

Model development platform 12 can receive selections of various model components 14. Model development platform 12 can pass selected model components 14 to a workbench 15 that combines selected model components 14 into a development model 16.

Workbench 15 can facilitate further refinement and adaptation of development model 16 by leveraging a number of different toolkits integrated with model development platform 12. For example, workbench 15 can facilitate alignment of the development model 16 with a desired performance profile on various tasks using a model alignment toolkit 17.

Model alignment toolkit 17 can provide a number of tools for causing development model 16 to generate outputs aligned with desired behavioral characteristics. Alignment can include increasing the accuracy, precision, recall, etc. of model outputs. Alignment can include enforcing output styles, schema, or other preferential characteristics of model outputs. Alignment can be general or domain-specific. For instance, a pre-trained foundational model 13-1 can begin with an initial level of performance across multiple domains. Alignment of the pre-trained foundational model 13-1 can include improving a performance in a particular domain of information or tasks (e.g., even at the expense of performance in another domain of information or tasks).

Model alignment toolkit 17 can integrate one or more dataset(s) 17-1 for aligning development model 16. Curated dataset(s) 17-1 can include labeled or unlabeled training data. Dataset(s) 17-1 can be obtained from public domain datasets. Dataset(s) 17-1 can be obtained from private datasets associated with one or more developer system(s) for the alignment of bespoke machine-learned model(s) customized for private use-cases.

Pre-training pipelines 17-2 can include a machine-learned model training workflow configured to update development model 16 over large-scale, potentially noisy datasets. For example, pre-training can leverage unsupervised learning techniques (e.g., de-noising, etc.) to process large numbers of training instances to update model parameters from an initialized state and achieve a desired baseline performance. Pre-training pipelines 17-2 can leverage unlabeled datasets in dataset(s) 17-1 to perform pre-training. Workbench 15 can implement a pre-training pipeline 17-2 to pre-train development model 16.

Fine-tuning pipelines 17-3 can include a machine-learned model training workflow configured to refine the model parameters of development model 16 with higher-quality data. Fine-tuning pipelines 17-3 can update development model 16 by conducting supervised training with labeled dataset(s) in dataset(s) 17-1. Fine-tuning pipelines 17-3 can update development model 16 by conducting reinforcement learning using reward signals from user feedback signals. Workbench 15 can implement a fine-tuning pipeline 17-3 to fine-tune development model 16.

Prompt libraries 17-4 can include sets of inputs configured to induce behavior aligned with desired performance criteria. Prompt libraries 17-4 can include few-shot prompts (e.g., inputs providing examples of desired model outputs for prepending to a desired runtime query), chain-of-thought prompts (e.g., inputs providing step-by-step reasoning within the exemplars to facilitate thorough reasoning by the model), and the like.

Example prompts can be retrieved from an available repository of prompt libraries 17-4. Example prompts can be contributed by one or more developer systems using workbench 15.

In some implementations, pre-trained or fine-tuned models can achieve satisfactory performance without exemplars in the inputs. For instance, zero-shot prompts can include inputs that lack exemplars. Zero-shot prompts can be within a domain within a training dataset or outside of the training domain(s).

Prompt libraries 17-4 can include one or more prompt engineering tools. Prompt engineering tools can provide workflows for retrieving or learning optimized prompt values. Prompt engineering tools can facilitate directly learning prompt values (e.g., input element values) based on one or more training iterations. Workbench 15 can implement prompt engineering tools in development model 16.

Prompt libraries 17-4 can include pipelines for prompt generation. For example, inputs can be generated using development model 16 itself or other machine-learned models. In this manner, for instance, a first model can process information about a task and output an input for a second model to process in order to perform a step of the task. The second model can be the same as or different from the first model. Workbench 15 can implement prompt generation pipelines in development model 16.

Prompt libraries 17-4 can include pipelines for context injection. For instance, a performance of development model 16 on a particular task can improve if provided with additional context for performing the task. Prompt libraries 17-4 can include software components configured to identify desired context, retrieve the context from an external source (e.g., a database, a sensor, etc.), and add the context to the input prompt. Workbench 15 can implement context injection pipelines in development model 16.

Although various training examples described herein with respect to model development platform 12 refer to "pre-training" and "fine-tuning," it is to be understood that model alignment toolkit 17 can generally support a wide variety of training techniques adapted for training a wide variety of machine-learned models. Example training techniques can correspond to the example training method 1000 described above.

Model development platform 12 can include a model plugin toolkit 18. Model plugin toolkit 18 can include a variety of tools configured for augmenting the functionality of a machine-learned model by integrating the machine-learned model with other systems, devices, and software components. For instance, a machine-learned model can use tools to increase performance quality where appropriate. For instance, deterministic tasks can be offloaded to dedicated tools in lieu of probabilistically performing the task with an increased risk of error. For instance, instead of autoregressively predicting the solution to a system of equations, a machine-learned model can recognize a tool to call for obtaining the solution and pass the system of equations to the appropriate tool. The tool can be a traditional system of equations solver that can operate deterministically to resolve the system of equations. The output of the tool can be returned in response to the original query. In this manner, tool use can allow some example models to focus on the strengths of machine-learned models-e.g., understanding an intent in an unstructured request for a task-while augmenting the performance of the model by offloading certain tasks to a more focused tool for rote application of deterministic algorithms to a well-defined problem.

Model plugin toolkit 18 can include validation tools 18-1. Validation tools 18-1 can include tools that can parse and confirm output(s) of a machine-learned model. Validation tools 18-1 can include engineered heuristics that establish certain thresholds applied to model outputs. For example, validation tools 18-1 can ground the outputs of machine-learned models to structured data sources (e.g., to mitigate "hallucinations").

Model plugin toolkit 18 can include tooling packages 18-2 for implementing one or more tools that can include scripts or other executable code that can be executed alongside development model 16. Tooling packages 18-2 can include one or more inputs configured to cause machine-learned model(s) to implement the tools (e.g., few-shot prompts that induce a model to output tool calls in the proper syntax, etc.). Tooling packages 18-2 can include, for instance, fine-tuning training data for training a model to use a tool.

Model plugin toolkit 18 can include interfaces for calling external application programming interfaces (APIs) 18-3. For instance, in addition to or in lieu of implementing tool calls or tool code directly with development model 16, development model 16 can be aligned to output instructions that initiate API calls to send or obtain data via external systems.

Model plugin toolkit 18 can integrate with prompt libraries 17-4 to build a catalog of available tools for use with development model 16. For instance, a model can receive, in an input, a catalog of available tools, and the model can generate an output that selects a tool from the available tools and initiates a tool call for using the tool.

Model development platform 12 can include a computational optimization toolkit 19 for optimizing a computational performance of development model 16. For instance, tools for model compression 19-1 can allow development model 16 to be reduced in size while maintaining a desired level of performance. For instance, model compression 19-1 can include quantization workflows, weight pruning and sparsification techniques, etc. Tools for hardware acceleration 19-2 can facilitate the configuration of the model storage and execution formats to operate optimally on different hardware resources. For instance, hardware acceleration 19-2 can include tools for optimally sharding models for distributed processing over multiple processing units for increased bandwidth, lower unified memory requirements, etc. Tools for distillation 19-3 can provide for the training of lighter-weight models based on the knowledge encoded in development model 16. For instance, development model 16 can be a highly performant, large machine-learned model optimized using model development platform 12. To obtain a lightweight model for running in resource-constrained environments, a smaller model can be a "student model" that learns to imitate development model 16 as a "teacher model." In this manner, for instance, the investment in learning the parameters and configurations of development model 16 can be efficiently transferred to a smaller model for more efficient inference.

Workbench 15 can implement one, multiple, or none of the toolkits implemented in model development platform 12. Workbench 15 can output an output model 20 based on development model 16. Output model 20 can be a deployment version of development model 16. Output model 20 can be a development or training checkpoint of development model 16. Output model 20 can be a distilled, compressed, or otherwise optimized version of development model 16.

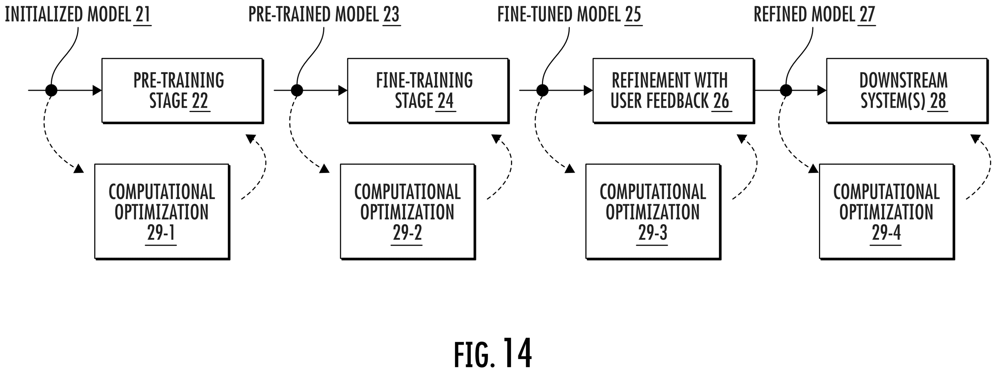

Figure 14 is a block diagram of an example training flow for training a machine-learned development model 16. One or more portion(s) of the example training flow can be implemented by a computing system that includes one or more computing devices such as, for example, computing systems described with reference to the other figures. Each respective portion of the example training flow can be performed by any (or any combination) of one or more computing devices. Moreover, one or more portion(s) of the example training flow can be implemented on the hardware components of the device(s) described herein, for example, to train one or more systems or models. Figure 14 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. Figure 14 is described with reference to elements/terms described with respect to other systems and figures for exemplary illustrated purposes and is not meant to be limiting. One or more portions of the example training flow can be performed additionally, or alternatively, by other systems.

Initially, development model 16 can persist in an initial state as an initialized model 21. Development model 16 can be initialized with weight values. Initial weight values can be random or based on an initialization schema. Initial weight values can be based on prior pre-training for the same or for a different model.

Initialized model 21 can undergo pre-training in a pre-training stage 22. Pre-training stage 22 can be implemented using one or more pre-training pipelines 17-2 over data from dataset(s) 17-1. Pre-training can be omitted, for example, if initialized model 21 is already pre-trained (e.g., development model 16 contains, is, or is based on a pre-trained foundational model or an expert model).

Pre-trained model 23 can then be a new version of development model 16, which can persist as development model 16 or as a new development model. Pre-trained model 23 can be the initial state if development model 16 was already pre-trained. Pre-trained model 23 can undergo fine-tuning in a fine-tuning stage 24. Fine-tuning stage 24 can be implemented using one or more fine-tuning pipelines 17-3 over data from dataset(s) 17-1. Fine-tuning can be omitted, for example, if a pre-trained model has satisfactory performance, if the model was already fine-tuned, or if other tuning approaches are preferred.

Fine-tuned model 29 can then be a new version of development model 16, which can persist as development model 16 or as a new development model. Fine-tuned model 29 can be the initial state if development model 16 was already fine-tuned. Fine-tuned model 29 can undergo refinement with user feedback 26. For instance, refinement with user feedback 26 can include reinforcement learning, optionally based on human feedback from human users of fine-tuned model 25. As reinforcement learning can be a form of fine-tuning, it is to be understood that fine-tuning stage 24 can subsume the stage for refining with user feedback 26. Refinement with user feedback 26 can produce a refined model 27. Refined model 27 can be output to downstream system(s) 28 for deployment or further development.

In some implementations, computational optimization operations can be applied before, during, or after each stage. For instance, initialized model 21 can undergo computational optimization 29-1 (e.g., using computational optimization toolkit 19) before pre-training stage 22. Pre-trained model 23 can undergo computational optimization 29-2 (e.g., using computational optimization toolkit 19) before fine-tuning stage 24. Fine-tuned model 25 can undergo computational optimization 29-3 (e.g., using computational optimization toolkit 19) before refinement with user feedback 26. Refined model 27 can undergo computational optimization 29-4 (e.g., using computational optimization toolkit 19) before output to downstream system(s) 28. Computational optimization(s) 29-1, ... , 29-4 can all be the same, all be different, or include at least some different optimization techniques.

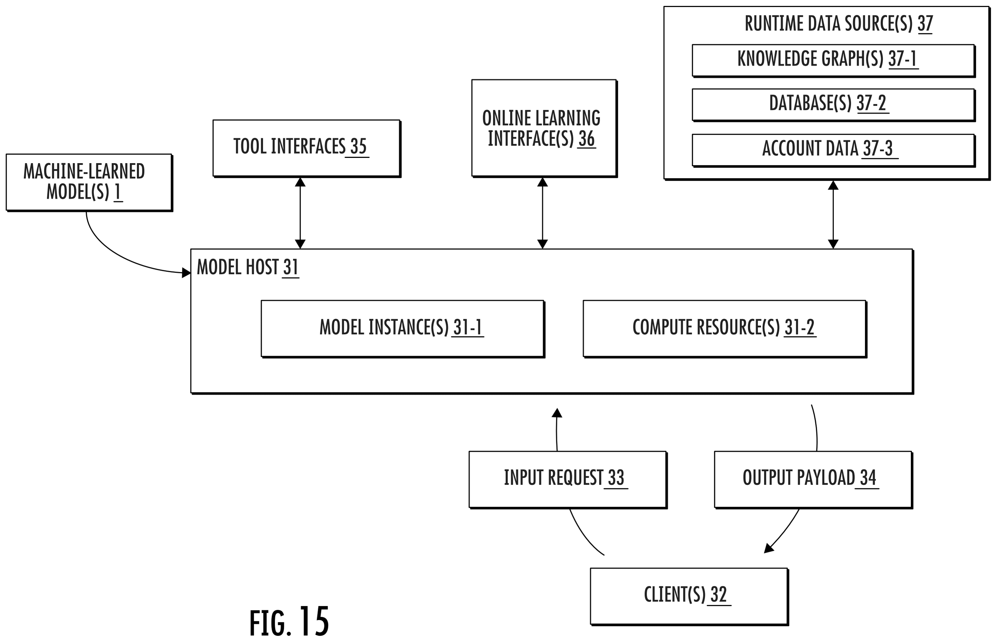

Figure 15 is a block diagram of an inference system for operating one or more machine-learned model(s) 1 to perform inference (e.g., for training, for deployment, etc.). A model host 31 can receive machine-learned model(s) 1. Model host 31 can host one or more model instance(s) 31-1, which can be one or multiple instances of one or multiple models. Model host 31 can host model instance(s) 31-1 using available compute resources 31-2 associated with model host 31.

Model host 31 can perform inference on behalf of one or more client(s) 32. Client(s) 32 can transmit an input request 33 to model host 31. Using input request 33, model host 31 can obtain input(s) 2 for input to machine-learned model(s) 1. Machine-learned model(s) 1 can process input(s) 2 to generate output(s) 3. Using output(s) 3, model host 31 can return an output payload 34 for responding to input request 33 from client(s) 32. Output payload 34 can include or be based on output(s) 3.

Model host 31 can leverage various other resources and tools to augment the inference task. For instance, model host 31 can communicate with tool interfaces 35 to facilitate tool use by model instance(s) 31-1. Tool interfaces 35 can include local or remote APIs. Tool interfaces 35 can include integrated scripts or other software functionality. Model host 31 can engage online learning interface(s) 36 to facilitate ongoing improvements to machine-learned model(s) 1. For instance, online learning interface(s) 36 can be used within reinforcement learning loops to retrieve user feedback on inferences served by model host 31. Model host 31 can access runtime data source(s) 37 for augmenting input(s) 2 with additional contextual information. For instance, runtime data source(s) 37 can include a knowledge graph 37-1 that facilitates structured information retrieval for information associated with input request(s) 33 (e.g., a search engine service). Runtime data source(s) 37 can include public or private, external or local database(s) 37-2 that can store information associated with input request(s) 33 for augmenting input(s) 2. Runtime data source(s) 37 can include account data 37-3 which can be retrieved in association with a user account corresponding to a client 32 for customizing the behavior of model host 31 accordingly.

Model host 31 can be implemented by one or multiple computing devices or systems. Client(s) 2 can be implemented by one or multiple computing devices or systems, which can include computing devices or systems shared with model host 31.

For example, model host 31 can operate on a server system that provides a machine-learning service to client device(s) that operate client(s) 32 (e.g., over a local or wide-area network). Client device(s) can be end-user devices used by individuals. Client device(s) can be server systems that operate client(s) 32 to provide various functionality as a service to downstream end-user devices.

In some implementations, model host 31 can operate on the same device or system as client(s) 32. Model host 31 can be a machine-learning service that runs on-device to provide machine-learning functionality to one or multiple applications operating on a client device, which can include an application implementing client(s) 32. Model host 31 can be a part of the same application as client(s) 32. For instance, model host 31 can be a subroutine or method implemented by one part of an application, and client(s) 32 can be another subroutine or method that engages model host 31 to perform inference functions within the application. It is to be understood that model host 31 and client(s) 32 can have various different configurations.

Model instance(s) 31-1 can include one or more machine-learned models that are available for performing inference. Model instance(s) 31-1 can include weights or other model components that are stored in persistent storage, temporarily cached, or loaded into high-speed memory. Model instance(s) 31-1 can include multiple instance(s) of the same model (e.g., for parallel execution of more requests on the same model). Model instance(s) 31-1 can include instance(s) of different model(s). Model instance(s) 31-1 can include cached intermediate states of active or inactive model(s) used to accelerate inference of those models. For instance, an inference session with a particular model may generate significant amounts of computational results that can be re-used for future inference runs (e.g., using a KV cache for transformer-based models). These computational results can be saved in association with that inference session so that session can be executed more efficiently when resumed.

Compute resource(s) 31-2 can include one or more processors (central processing units, graphical processing units, tensor processing units, machine-learning accelerators, etc.) connected to one or more memory devices. Compute resource(s) 31-2 can include a dynamic pool of available resources shared with other processes. Compute resource(s) 31-2 can include memory devices large enough to fit an entire model instance in a single memory instance. Compute resource(s) 31-2 can also shard model instance(s) across multiple memory devices (e.g., using data parallelization or tensor parallelization, etc.). This can be done to increase parallelization or to execute a large model using multiple memory devices which individually might not be able to fit the entire model into memory.

Input request 33 can include data for input(s) 2. Model host 31 can process input request 33 to obtain input(s) 2. Input(s) 2 can be obtained directly from input request 33 or can be retrieved using input request 33. Input request 33 can be submitted to model host 31 via an API.

Model host 31 can perform inference over batches of input requests 33 in parallel. For instance, a model instance 31-1 can be configured with an input structure that has a batch dimension. Separate input(s) 2 can be distributed across the batch dimension (e.g., rows of an array). The separate input(s) 2 can include completely different contexts. The separate input(s) 2 can be multiple inference steps of the same task. The separate input(s) 2 can be staggered in an input structure, such that any given inference cycle can be operating on different portions of the respective input(s) 2. In this manner, for instance, model host 31 can perform inference on the batch in parallel, such that output(s) 3 can also contain the batch dimension and return the inference results for the batched input(s) 2 in parallel. In this manner, for instance, batches of input request(s) 33 can be processed in parallel for higher throughput of output payload(s) 34.

Output payload 34 can include or be based on output(s) 3 from machine-learned model(s) 1. Model host 31 can process output(s) 3 to obtain output payload 34. This can include chaining multiple rounds of inference (e.g., iteratively, recursively, across the same model(s) or different model(s)) to arrive at a final output for a task to be returned in output payload 34. Output payload 34 can be transmitted to client(s) 32 via an API.

Online learning interface(s) 36 can facilitate reinforcement learning of machine-learned model(s) 1. Online learning interface(s) 36 can facilitate reinforcement learning with human feedback (RLHF). Online learning interface(s) 36 can facilitate federated learning of machine-learned model(s) 1.

Model host 31 can access a library of pre-trained adapters or LoRA modules that can adapt a baseline model to align its outputs with a desired performance profile, augment model capabilities (e.g., to adapt to a different input modality, etc.), and the like. For instance, model host 31 can receive an input request to load a customized model, and model host 31 can retrieve one or more components to adapt a baseline model to the custom profile. Model host 31 can determine that a particular functionality is needed for a particular task (e.g., based on an output of a model that preprocesses an input) and retrieve a pre-trained component accordingly.

Model host 31 can execute machine-learned model(s) 1 to perform inference for various tasks using various types of data. For example, various different input(s) 2 and output(s) 3 can be used for various different tasks. In some implementations, input(s) 2 can be or otherwise represent image data. Machine-learned model(s) 1 can process the image data to generate an output. As an example, machine-learned model(s) 1 can process the image data to generate an image recognition output (e.g., a recognition of the image data, a latent embedding of the image data, an encoded representation of the image data, a hash of the image data, etc.). As another example, machine-learned model(s) 1 can process the image data to generate an image segmentation output. As another example, machine-learned model(s) 1 can process the image data to generate an image classification output. As another example, machine-learned model(s) 1 can process the image data to generate an image data modification output (e.g., an alteration of the image data, etc.). As another example, machine-learned model(s) 1 can process the image data to generate an encoded image data output (e.g., an encoded and/or compressed representation of the image data, etc.). As another example, machine-learned model(s) 1 can process the image data to generate an upscaled image data output. As another example, machine-learned model(s) 1 can process the image data to generate a prediction output.

In some implementations, the task is a computer vision task. In some cases, input(s) 2 includes pixel data for one or more images and the task is an image processing task. For example, the image processing task can be image classification, where the output is a set of scores, each score corresponding to a different object class and representing the likelihood that the one or more images depict an object belonging to the object class. The image processing task may be object detection, where the image processing output identifies one or more regions in the one or more images and, for each region, a likelihood that region depicts an object of interest. As another example, the image processing task can be image segmentation, where the image processing output defines, for each pixel in the one or more images, a respective likelihood for each category in a predetermined set of categories. For example, the set of categories can be foreground and background. As another example, the set of categories can be object classes. As another example, the image processing task can be depth estimation, where the image processing output defines, for each pixel in the one or more images, a respective depth value. As another example, the image processing task can be motion estimation, where the network input includes multiple images, and the image processing output defines, for each pixel of one of the input images, a motion of the scene depicted at the pixel between the images in the network input.

In some implementations, input(s) 2 can be or otherwise represent natural language data. Machine-learned model(s) 1 can process the natural language data to generate an output. As an example, machine-learned model(s) 1 can process the natural language data to generate a language encoding output. As another example, machine-learned model(s) 1 can process the natural language data to generate a latent text embedding output. As another example, machine-learned model(s) 1 can process the natural language data to generate a translation output. As another example, machine-learned model(s) 1 can process the natural language data to generate a classification output. As another example, machine-learned model(s) 1 can process the natural language data to generate a textual segmentation output. As another example, machine-learned model(s) 1 can process the natural language data to generate a semantic intent output. As another example, machine-learned model(s) 1 can process the natural language data to generate an upscaled text or natural language output (e.g., text or natural language data that is higher quality than the input text or natural language, etc.). As another example, machine-learned model(s) 1 can process the natural language data to generate a prediction output (e.g., one or more predicted next portions of natural language content).

In some implementations, input(s) 2 can be or otherwise represent speech data (e.g., data describing spoken natural language, such as audio data, textual data, etc.). Machine-learned model(s) 1 can process the speech data to generate an output. As an example, machine-learned model(s) 1 can process the speech data to generate a speech recognition output. As another example, machine-learned model(s) 1 can process the speech data to generate a speech translation output. As another example, machine-learned model(s) 1 can process the speech data to generate a latent embedding output. As another example, machine-learned model(s) 1 can process the speech data to generate an encoded speech output (e.g., an encoded and/or compressed representation of the speech data, etc.). As another example, machine-learned model(s) 1 can process the speech data to generate an upscaled speech output (e.g., speech data that is higher quality than the input speech data, etc.). As another example, machine-learned model(s) 1 can process the speech data to generate a textual representation output (e.g., a textual representation of the input speech data, etc.). As another example, machine-learned model(s) 1 can process the speech data to generate a prediction output.

In some implementations, input(s) 2 can be or otherwise represent latent encoding data (e.g., a latent space representation of an input, etc.). Machine-learned model(s) 1 can process the latent encoding data to generate an output. As an example, machine-learned model(s) 1 can process the latent encoding data to generate a recognition output. As another example, machine-learned model(s) 1 can process the latent encoding data to generate a reconstruction output. As another example, machine-learned model(s) 1 can process the latent encoding data to generate a search output. As another example, machine-learned model(s) 1 can process the latent encoding data to generate a reclustering output. As another example, machine-learned model(s) 1 can process the latent encoding data to generate a prediction output.

In some implementations, input(s) 2 can be or otherwise represent statistical data. Statistical data can be, represent, or otherwise include data computed and/or calculated from some other data source. Machine-learned model(s) 1 can process the statistical data to generate an output. As an example, machine-learned model(s) 1 can process the statistical data to generate a recognition output. As another example, machine-learned model(s) 1 can process the statistical data to generate a prediction output. As another example, machine-learned model(s) 1 can process the statistical data to generate a classification output. As another example, machine-learned model(s) 1 can process the statistical data to generate a segmentation output. As another example, machine-learned model(s) 1 can process the statistical data to generate a visualization output. As another example, machine-learned model(s) 1 can process the statistical data to generate a diagnostic output.

In some implementations, input(s) 2 can be or otherwise represent sensor data. Machine-learned model(s) 1 can process the sensor data to generate an output. As an example, machine-learned model(s) 1 can process the sensor data to generate a recognition output. As another example, machine-learned model(s) 1 can process the sensor data to generate a prediction output. As another example, machine-learned model(s) 1 can process the sensor data to generate a classification output. As another example, machine-learned model(s) 1 can process the sensor data to generate a segmentation output. As another example, machine-learned model(s) 1 can process the sensor data to generate a visualization output. As another example, machine-learned model(s) 1 can process the sensor data to generate a diagnostic output. As another example, machine-learned model(s) 1 can process the sensor data to generate a detection output.

In some implementations, machine-learned model(s) 1 can be configured to perform a task that includes encoding input data for reliable and/or efficient transmission or storage (and/or corresponding decoding). For example, the task may be an audio compression task. The input may include audio data and the output may comprise compressed audio data. In another example, the input includes visual data (e.g. one or more images or videos), the output comprises compressed visual data, and the task is a visual data compression task. In another example, the task may comprise generating an embedding for input data (e.g. input audio or visual data). In some cases, the input includes audio data representing a spoken utterance and the task is a speech recognition task. The output may comprise a text output which is mapped to the spoken utterance. In some cases, the task comprises encrypting or decrypting input data. In some cases, the task comprises a microprocessor performance task, such as branch prediction or memory address translation.

In some implementations, the task is a generative task, and machine-learned model(s) 1 can be configured to output content generated in view of input(s) 2. For instance, input(s) 2 can be or otherwise represent data of one or more modalities that encodes context for generating additional content.

In some implementations, the task can be a text completion task. Machine-learned model(s) 1 can be configured to process input(s) 2 that represent textual data and to generate output(s) 3 that represent additional textual data that completes a textual sequence that includes input(s) 2. For instance, machine-learned model(s) 1 can be configured to generate output(s) 3 to complete a sentence, paragraph, or portion of text that follows from a portion of text represented by input(s) 2.

In some implementations, the task can be an instruction-following task. Machine-learned model(s) 1 can be configured to process input(s) 2 that represent instructions to perform a function and to generate output(s) 3 that advance a goal of satisfying the instruction function (e.g., at least a step of a multi-step procedure to perform the function). Output(s) 3 can represent data of the same or of a different modality as input(s) 2. For instance, input(s) 2 can represent textual data (e.g., natural language instructions for a task to be performed) and machine-learned model(s) 1 can process input(s) 2 to generate output(s) 3 that represent textual data responsive to the instructions (e.g., natural language responses, programming language responses, machine language responses, etc.). Input(s) 2 can represent image data (e.g., image-based instructions for a task to be performed, optionally accompanied by textual instructions) and machine-learned model(s) 1 can process input(s) 2 to generate output(s) 3 that represent textual data responsive to the instructions (e.g., natural language responses, programming language responses, machine language responses, etc.). One or more output(s) 3 can be iteratively or recursively generated to sequentially process and accomplish steps toward accomplishing the requested functionality. For instance, an initial output can be executed by an external system or be processed by machine-learned model(s) 1 to complete an initial step of performing a function. Multiple steps can be performed, with a final output being obtained that is responsive to the initial instructions.

In some implementations, the task can be a question answering task. Machine-learned model(s) 1 can be configured to process input(s) 2 that represent a question to answer and to generate output(s) 3 that advance a goal of returning an answer to the question (e.g., at least a step of a multi-step procedure to perform the function). Output(s) 3 can represent data of the same or of a different modality as input(s) 2. For instance, input(s) 2 can represent textual data (e.g., natural language instructions for a task to be performed) and machine-learned model(s) 1 can process input(s) 2 to generate output(s) 3 that represent textual data responsive to the question (e.g., natural language responses, programming language responses, machine language responses, etc.). Input(s) 2 can represent image data (e.g., image-based instructions for a task to be performed, optionally accompanied by textual instructions) and machine-learned model(s) 1 can process input(s) 2 to generate output(s) 3 that represent textual data responsive to the question (e.g., natural language responses, programming language responses, machine language responses, etc.). One or more output(s) 3 can be iteratively or recursively generated to sequentially process and accomplish steps toward answering the question. For instance, an initial output can be executed by an external system or be processed by machine-learned model(s) 1 to complete an initial step of obtaining an answer to the question (e.g., querying a database, performing a computation, executing a script, etc.). Multiple steps can be performed, with a final output being obtained that is responsive to the question.

In some implementations, the task can be an image generation task. Machine-learned model(s) 1 can be configured to process input(s) 2 that represent context regarding a desired portion of image content. The context can include text data, image data, audio data, etc. Machine-learned model(s) 1 can be configured to generate output(s) 3 that represent image data that depicts imagery related to the context. For instance, machine-learned model(s) 1 can be configured to generate pixel data of an image. Values for channel(s) associated with the pixels in the pixel data can be selected based on the context (e.g., based on a probability determined based on the context).

In some implementations, the task can be an audio generation task. Machine-learned model(s) 1 can be configured to process input(s) 2 that represent context regarding a desired portion of audio content. The context can include text data, image data, audio data, etc. Machine-learned model(s) 1 can be configured to generate output(s) 3 that represent audio data related to the context. For instance, machine-learned model(s) 1 can be configured to generate waveform data in the form of an image (e.g., a spectrogram). Values for channel(s) associated with pixels of the image can be selected based on the context. Machine-learned model(s) 1 can be configured to generate waveform data in the form of a sequence of discrete samples of a continuous waveform. Values of the sequence can be selected based on the context (e.g., based on a probability determined based on the context).

In some implementations, the task can be a data generation task. Machine-learned model(s) 1 can be configured to process input(s) 2 that represent context regarding a desired portion of data (e.g., data from various data domains, such as sensor data, image data, multimodal data, statistical data, etc.). The desired data can be, for instance, synthetic data for training other machine-learned models. The context can include arbitrary data type(s). Machine-learned model(s) 1 can be configured to generate output(s) 3 that represent data that aligns with the desired data. For instance, machine-learned model(s) 1 can be configured to generate data values for populating a dataset. Values for the data object(s) can be selected based on the context (e.g., based on a probability determined based on the context).

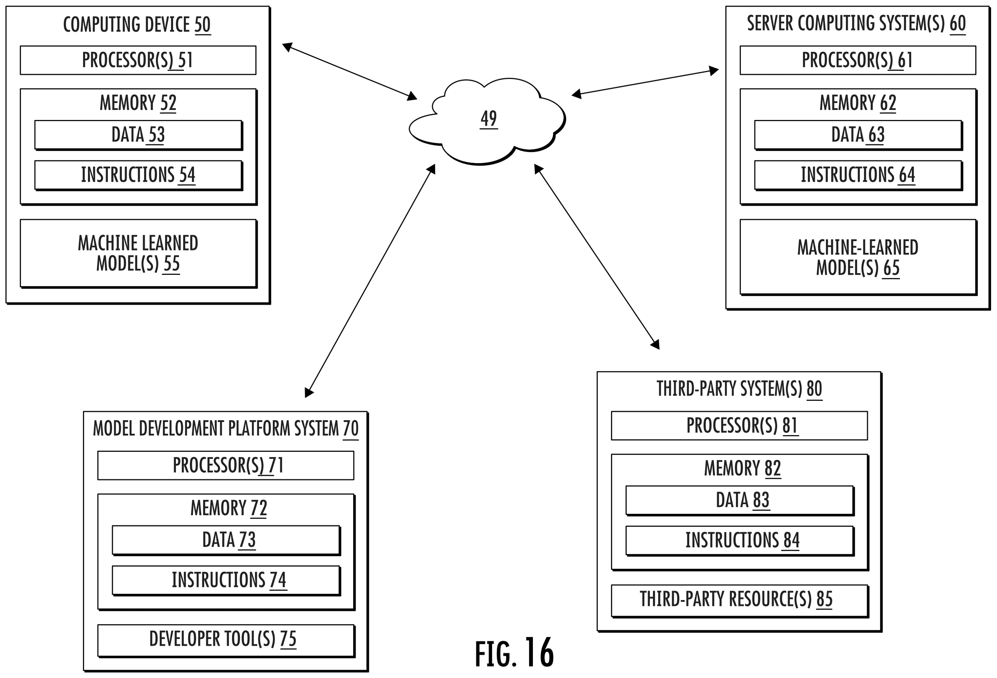

Figure 16 is a block diagram of an example networked computing system that can perform aspects of example implementations of the present disclosure. The system can include a number of computing devices and systems that are communicatively coupled over a network 49. An example computing device 50 is described to provide an example of a computing device that can perform any aspect of the present disclosure (e.g., implementing model host 31, client(s) 32, or both). An example server computing system 60 is described as an example of a server computing system that can perform any aspect of the present disclosure (e.g., implementing model host 31, client(s) 32, or both). Computing device 50 and server computing system(s) 60 can cooperatively interact (e.g., over network 49) to perform any aspect of the present disclosure (e.g., implementing model host 31, client(s) 32, or both). Model development platform system 70 is an example system that can host or serve model development platform(s) 12 for development of machine-learned models. Third-party system(s) 80 are example system(s) with which any of computing device 50, server computing system(s) 60, or model development platform system(s) 70 can interact in the performance of various aspects of the present disclosure (e.g., engaging third-party tools, accessing third-party databases or other resources, etc.).

Network 49 can be any type of communications network, such as a local area network (e.g., intranet), wide area network (e.g., Internet), or some combination thereof and can include any number of wired or wireless links. In general, communication over network 49 can be carried via any type of wired or wireless connection, using a wide variety of communication protocols (e.g., TCP/IP, HTTP, SMTP, FTP), encodings or formats (e.g., HTML, XML), or protection schemes (e.g., VPN, secure HTTP, SSL). Network 49 can also be implemented via a system bus. For instance, one or more devices or systems of Figure 16 can be co-located with, contained by, or otherwise integrated into one or more other devices or systems.

Computing device 50 can be any type of computing device, such as, for example, a personal computing device (e.g., laptop or desktop), a mobile computing device (e.g., smartphone or tablet), a gaming console or controller, a wearable computing device, an embedded computing device, a server computing device, a virtual machine operating on a host device, or any other type of computing device. Computing device 50 can be a client computing device. Computing device 50 can be an end-user computing device. Computing device 50 can be a computing device of a service provided that provides a service to an end user (who may use another computing device to interact with computing device 50).

Computing device 50 can include one or more processors 51 and a memory 52. Processor(s) 51 can be any suitable processing device (e.g., a processor core, a microprocessor, an ASIC, an FPGA, a controller, a microcontroller, etc.) and can be one processor or a plurality of processors that are operatively connected. Memory 52 can include one or more non-transitory computer-readable storage media, such as HBM, RAM, ROM, EEPROM, EPROM, flash memory devices, magnetic disks, etc., and combinations thereof. Memory 52 can store data 53 and instructions 54 which can be executed by processor(s) 51 to cause computing device 50 to perform operations. The operations can implement any one or multiple features described herein. The operations can implement example methods and techniques described herein.

Computing device 50 can also include one or more input components that receive user input. For example, a user input component can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, camera, LIDAR, a physical keyboard or other buttons, or other means by which a user can provide user input.

Computing device 50 can store or include one or more machine-learned models 55. Machine-learned models 55 can include one or more machine-learned model(s) 1, such as a sequence processing model 4. Machine-learned models 55 can include one or multiple model instance(s) 31-1. Machine-learned model(s) 55 can be received from server computing system(s) 60, model development platform system 70, third party system(s) 80 (e.g., an application distribution platform), or developed locally on computing device 50. Machine-learned model(s) 55 can be loaded into memory 52 and used or otherwise implemented by processor(s) 51. Computing device 50 can implement multiple parallel instances of machine-learned model(s) 55.

Server computing system(s) 60 can include one or more processors 61 and a memory 62. Processor(s) 61 can be any suitable processing device (e.g., a processor core, a microprocessor, an ASIC, an FPGA, a controller, a microcontroller, etc.) and can be one processor or a plurality of processors that are operatively connected. Memory 62 can include one or more non-transitory computer-readable storage media, such as HBM, RAM, ROM, EEPROM, EPROM, flash memory devices, magnetic disks, etc., and combinations thereof. Memory 62 can store data 63 and instructions 64 which can be executed by processor(s) 61 to cause server computing system(s) 60 to perform operations. The operations can implement any one or multiple features described herein. The operations can implement example methods and techniques described herein.

In some implementations, server computing system 60 includes or is otherwise implemented by one or multiple server computing devices. In instances in which server computing system 60 includes multiple server computing devices, such server computing devices can operate according to sequential computing architectures, parallel computing architectures, or some combination thereof.

Server computing system 60 can store or otherwise include one or more machine-learned models 65. Machine-learned model(s) 65 can be the same as or different from machine-learned model(s) 55. Machine-learned models 65 can include one or more machine-learned model(s) 1, such as a sequence processing model 4. Machine-learned models 65 can include one or multiple model instance(s) 31-1. Machine-learned model(s) 65 can be received from computing device 50, model development platform system 70, third party system(s) 80, or developed locally on server computing system(s) 60. Machine-learned model(s) 65 can be loaded into memory 62 and used or otherwise implemented by processor(s) 61. Server computing system(s) 60 can implement multiple parallel instances of machine-learned model(s) 65.

In an example configuration, machine-learned models 65 can be included in or otherwise stored and implemented by server computing system 60 to establish a client-server relationship with computing device 50 for serving model inferences. For instance, server computing system(s) 60 can implement model host 31 on behalf of client(s) 32 on computing device 50. For instance, machine-learned models 65 can be implemented by server computing system 60 as a portion of a web service (e.g., remote machine-learned model hosting service, such as an online interface for performing machine-learned model operations over a network on server computing system(s) 60). For instance, server computing system(s) 60 can communicate with computing device 50 over a local intranet or internet connection. For instance, computing device 50 can be a workstation or endpoint in communication with server computing system(s) 60, with implementation of machine-learned models 65 being managed by server computing system(s) 60 to remotely perform inference (e.g., for runtime or training operations), with output(s) returned (e.g., cast, streamed, etc.) to computing device 50. Machine-learned models 65 can work cooperatively or interoperatively with machine-learned models 55 on computing device 50 to perform various tasks.

Model development platform system(s) 70 can include one or more processors 71 and a memory 72. Processor(s) 71 can be any suitable processing device (e.g., a processor core, a microprocessor, an ASIC, an FPGA, a controller, a microcontroller, etc.) and can be one processor or a plurality of processors that are operatively connected. Memory 72 can include one or more non-transitory computer-readable storage media, such as HBM, RAM, ROM, EEPROM, EPROM, flash memory devices, magnetic disks, etc., and combinations thereof. Memory 72 can store data 73 and instructions 74 which can be executed by processor(s) 71 to cause model development platform system(s) 70 to perform operations. The operations can implement any one or multiple features described herein. The operations can implement example methods and techniques described herein. Example operations include the functionality described herein with respect to model development platform 12. This and other functionality can be implemented by developer tool(s) 75.

Third-party system(s) 80 can include one or more processors 81 and a memory 82. Processor(s) 81 can be any suitable processing device (e.g., a processor core, a microprocessor, an ASIC, an FPGA, a controller, a microcontroller, etc.) and can be one processor or a plurality of processors that are operatively connected. Memory 82 can include one or more non-transitory computer-readable storage media, such as HBM, RAM, ROM, EEPROM, EPROM, flash memory devices, magnetic disks, etc., and combinations thereof. Memory 82 can store data 83 and instructions 84 which can be executed by processor(s) 81 to cause third-party system(s) 80 to perform operations. The operations can implement any one or multiple features described herein. The operations can implement example methods and techniques described herein. Example operations include the functionality described herein with respect to tools and other external resources called when training or performing inference with machine-learned model(s) 1, 4, 16, 20, 55, 65, etc. (e.g., third-party resource(s) 85).

Figure 16 illustrates one example arrangement of computing systems that can be used to implement the present disclosure. Other computing system configurations can be used as well. For example, in some implementations, one or both of computing system 50 or server computing system(s) 60 can implement all or a portion of the operations of model development platform system 70. For example, computing system 50 or server computing system(s) 60 can implement developer tool(s) 75 (or extensions thereof) to develop, update/train, or refine machine-learned models 1, 4, 16, 20, 55, 65, etc. using one or more techniques described herein with respect to model alignment toolkit 17. In this manner, for instance, computing system 50 or server computing system(s) 60 can develop, update/train, or refine machine-learned models based on local datasets (e.g., for model personalization/customization, as permitted by user data preference selections).

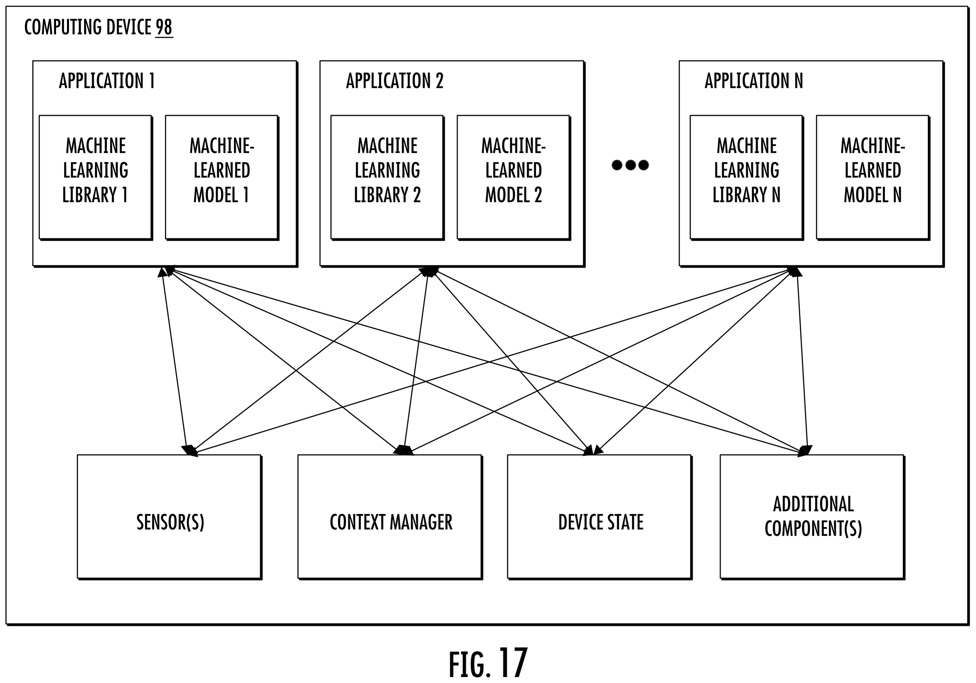

Figure 17 is a block diagram of an example computing device 98 that performs according to example embodiments of the present disclosure. Computing device 98 can be a user computing device or a server computing device (e.g., computing device 50, server computing system(s) 60, etc.). Computing device 98 can implement model host 31. For instance, computing device 98 can include a number of applications (e.g., applications 1 through N). Each application can contain its own machine learning library and machine-learned model(s). For example, each application can include a machine-learned model. Example applications include a text messaging application, an email application, a dictation application, a virtual keyboard application, a browser application, etc. As illustrated in Figure 17, each application can communicate with a number of other components of the computing device, such as, for example, one or more sensors, a context manager, a device state component, or additional components. In some implementations, each application can communicate with each device component using an API (e.g., a public API). In some implementations, the API used by each application is specific to that application.

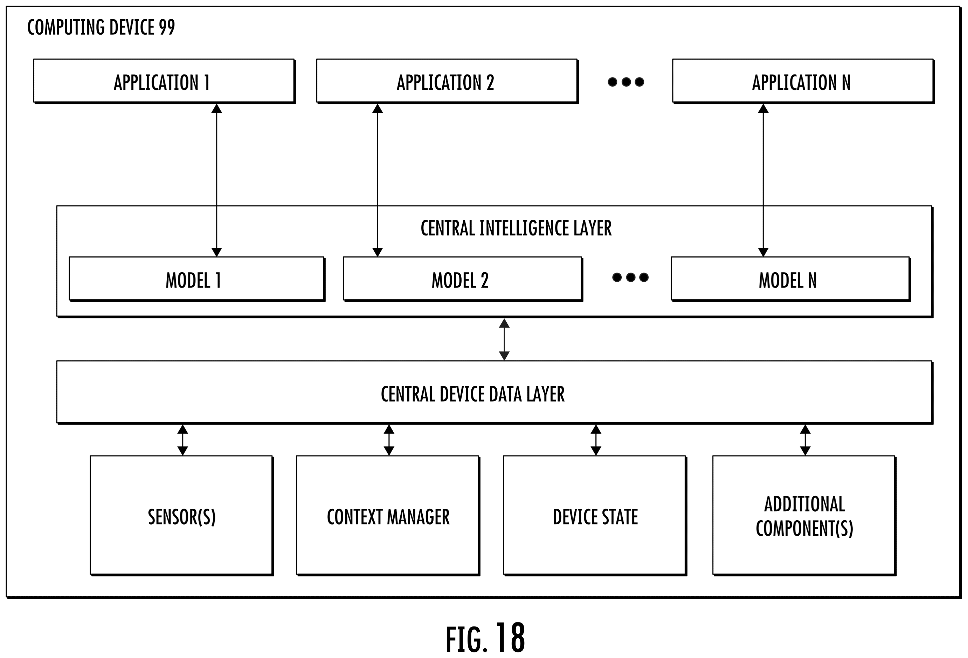

Figure 18 is a block diagram of an example computing device 99 that performs according to example embodiments of the present disclosure. Computing device 99 can be the same as or different from computing device 98. Computing device 99 can be a user computing device or a server computing device (e.g., computing device 50, server computing system(s) 60, etc.). Computing device 98 can implement model host 31. For instance, computing device 99 can include a number of applications (e.g., applications 1 through N). Each application can be in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer can include a number of machine-learned models. For example, as illustrated in Figure 18, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of computing device 99.

The central intelligence layer can communicate with a central device data layer. The central device data layer can be a centralized repository of data for computing device 99. As illustrated in Figure 18, the central device data layer can communicate with a number of other components of the computing device, such as, for example, one or more sensors, a context manager, a device state component, or additional components. In some implementations, the central device data layer can communicate with each device component using an API (e.g., a private API).

Further aspects of the invention are defined in the following clauses:
14. A computing system configured to process graphical depictions of data, the computing system comprising: one or more processors; and one or more non-transitory computer-readable media that collectively store: a machine-learned information extraction model configured to generate, as an output of the machine-learned information extraction model, screenshot replication data comprising operational data and navigation data associated with a first operational state; and a screenshot orchestrator configured to: obtain an input comprising a screenshot, wherein the screenshot comprises an image that depicts content displayed on a screen of a first computing device operating in a first operational state; and automatically control a second computing device based on the screenshot replication data to cause the second computing device to operate in a second operational state, the second operational state being a replica of the first operational state.
15. The computing system of clause 14, wherein the operational data comprises one or more values for one or more operational parameters associated with the first operational state, wherein the one or more values for the one or more operational parameters comprise one or more of: a current application being executed by the first computing device and data describing one or more user interface elements contained within the content, wherein the navigation data comprises one or more navigation identifiers associated with the first operational state, and wherein the one or more navigation identifiers comprise one or more of: a Uniform Resource Locator, an application menu hierarchy position, and a scroll position associated with the first operational state.
16. The computing system of clause 14 or 15, wherein the navigation data comprises one or more navigation identifiers associated with the first operational state, and wherein the one or more navigation identifiers comprise one or more of: a mobile device application identifier, an application menu hierarchy position, or a scroll position associated with the first operational state.
17. The computing system of any of clauses 14-16, wherein automatically controlling, by the computing system, the second computing device based on the screenshot replication data comprises: processing, by the computing system, the screenshot replication data with a machine-learned reconstruction model to generate, as an output of the machine-learned reconstruction model, a series of control actions comprising a page location action, an application menu hierarchy position action, and a scroll position action.
18. The computing system of any of clauses 14-17, wherein the operational data comprises user interface element data describing one or more user interface elements contained within the content, the one or more user interface elements comprising one or more static user interface elements and one or more dynamic user interface elements, and wherein the second computing device operating in the second operational state displays individual ones of the one or more static user interface elements with a same static content as in the screenshot, and individual ones of the one or more dynamic user interface elements with a same or different dynamic content than in the screenshot.
19. One or more non-transitory computer-readable media that collectively store instructions that, when executed by a computing system, cause the computing system to perform operations, the operations comprising: obtaining a screenshot depicting content displayed on a device screen; processing the screenshot with a machine-learned information extraction model to generate, as an output of the machine-learned information extraction model, screenshot replication data, wherein the screenshot replication data comprises one or both of operational data and navigation data; and automatically controlling a computing device based on the screenshot replication data to cause the computing device to initiate replication of an operational state used to present the content on the device screen.
20. The one or more non-transitory computer-readable media of clause 19, the operations further comprising: receiving a notification of a login error or a communication channel subscription error prior to completion of the replication of the operational state.

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations or additions to the present subject matter as would be readily apparent to one of ordinary skill in the art. For instance, features illustrated or described as part of one embodiment can be used with another embodiment to yield a still further embodiment. Thus, it is intended that the present disclosure covers such alterations, variations, and equivalents.

Aspects of the disclosure have been described in terms of illustrative embodiments thereof. Any and all features in the following claims can be combined or rearranged in any way possible, including combinations of claims not explicitly enumerated in combination together, as the example claim dependencies listed herein should not be read as limiting the scope of possible combinations of features disclosed herein. Accordingly, the scope of the present disclosure is by way of example rather than by way of limitation, and the subject disclosure does not preclude inclusion of such modifications, variations or additions to the present subject matter as would be readily apparent to one of ordinary skill in the art. Moreover, terms are described herein using lists of example elements joined by conjunctions such as "and," "or," "but," etc. It should be understood that such conjunctions are provided for explanatory purposes only. Clauses and other sequences of items joined by a particular conjunction such as "or," for example, can refer to "and/or," "at least one of", "any combination of" example elements listed therein, etc. Terms such as "based on" should be understood as "based at least in part on."

The term "can" should be understood as referring to a possibility of a feature in various implementations and not as prescribing an ability that is necessarily present in every implementation. For example, the phrase "X can perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.
The term "may" should be understood as referring to a possibility of a feature in various implementations and not as prescribing an ability that is necessarily present in every implementation. For example, the phrase "X may perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

## Claims

1. A computer-implemented method, the method comprising:
obtaining, by a computing system comprising one or more computing devices, an input comprising a screenshot, wherein the screenshot comprises an image that depicts content displayed on a screen of a first computing device operating in a first operational state;
processing, by the computing system, the screenshot with a machine-learned information extraction model to generate, as an output of the machine-learned information extraction model, screenshot replication data, wherein the screenshot replication data comprises one or both of:
one or more values for one or more operational parameters associated with the first operational state; and/or
one or more navigation identifiers associated with the first operational state; and
automatically controlling, by the computing system, a second computing device based on the screenshot replication data to cause the second computing device to operate in a second operational state, the second operational state being a replica of the first operational state.

2. The computer-implemented method of claim 1, wherein the screenshot replication data comprises the one or more values for the one or more operational parameters associated with the first operational state, and wherein the one or more values for the one or more operational parameters comprise one or more of: a current application being executed by the first computing device and data describing one or more user interface elements contained within the content.

3. The computer-implemented method of claim 1 or 2, wherein the screenshot replication data comprises the one or more navigation identifiers associated with the first operational state, and wherein the one or more navigation identifiers comprise one or more of: a Uniform Resource Locator, an application menu hierarchy position, and a scroll position associated with the first operational state.

4. The computer-implemented method of any of claims 1-3, wherein automatically controlling, by the computing system, the second computing device based on the screenshot replication data comprises:
processing, by the computing system, the screenshot replication data with a machine-learned reconstruction model to generate, as an output of the machine-learned reconstruction model, a series of control actions to navigate the second computing device from a current operational state of the second computing device to the second operational state; and
automatically controlling, by the computing system, the second computing device to perform the series of control actions.

5. The computer-implemented method of any of claims 1-4, further comprising:
processing, by the computing system, the screenshot and data descriptive of the second operational state with a screen discrimination model to generate, as an output of the screen discrimination model, difference data indicating whether the second operational state successfully replicates the first operational state; and
providing, by the computing system, the difference data as an output.

6. The computer-implemented method of claim 3 or of claim 4 or 5 when dependent on claim 3, wherein processing the screenshot comprises:
mapping the one or more navigation identifiers to actions effecting the replica of the first operational state on the second computing device, and
wherein automatically controlling, by the computing system, the second computing device comprises automatically controlling, by the computing system, the second computing device to perform the actions.

7. The computer-implemented method of any of claims 1-6, further comprising:
mapping the screenshot replication data associated with the first operational state to real-time replication data associated with the second operational state to identify whether the screenshot replication data matches the real-time replication data.

8. The computer-implemented method of any of claims 1-7, wherein the screenshot comprises a representation of a website window or a mobile computing device application window of the first computing device.

9. The computer-implemented method of any of claims 1-8, wherein the machine-learned information extraction model, a machine-learned reconstruction model, and a screen discrimination model have been trained separately from each other.

10. The computer-implemented method of any of claims 1-9, wherein:
the machine-learned information extraction model has been trained using a set of supervised training data comprising a plurality of training pairs, each training pair comprising a training screenshot and training information identifying the screenshot, the training information comprising one or more training operational parameters and one or more training navigation identifiers; and
the machine-learned information extraction model has been trained to predict information identifying the screenshot.

11. The computer-implemented method of any of claims 1-10, wherein the second computing device is the first computing device, and automatically controlling, by the computing system, the second computing device comprises:
reconstructing a scroll position of a website or a mobile computing device application; and
generating a reconstruction of the screenshot by scrolling the website or the mobile computing device application to the scroll position.

12. The computer-implemented method of any of claims 1-11, further comprising:
training a machine-learned reconstruction model using a set of supervised training data comprising a plurality of training pairs, each training pair comprising a training screenshot, training screenshot replication data, and a training reconstruction of the screenshot, wherein the training screenshot replication data comprises one or more training operational parameters and one or more training navigation parameters, the training reconstruction comprises a reconstruction mapped to the training screenshot to render a training depiction of a dataset corresponding to the training reconstruction of the screenshot, and the machine-learned reconstruction model has been trained to predict a reconstruction of the screenshot.

13. The computer-implemented method of any of claims 1-12, wherein processing, by the computing system, the screenshot comprises:
identifying a portion of the screenshot representing user interface elements of a website or a mobile computing device application; and
in response to identifying the portion of the screenshot, identifying the user interface elements of the website or the mobile computing device application.

14. A computing system configured to process graphical depictions of data, the computing system comprising:
one or more processors; and
one or more non-transitory computer-readable media that collectively store:
a machine-learned information extraction model configured to generate, as an output of the machine-learned information extraction model, screenshot replication data comprising operational data and navigation data associated with a first operational state; and
a screenshot orchestrator configured to:
obtain an input comprising a screenshot, wherein the screenshot comprises an image that depicts content displayed on a screen of a first computing device operating in a first operational state; and
automatically control a second computing device based on the screenshot replication data to cause the second computing device to operate in a second operational state, the second operational state being a replica of the first operational state.

15. A computer program comprising instructions that, when executed by a computing system, cause a computing system to perform the operations of the method of any of claims 1-13.
